Europäisches Patentamt

European Patent Office

Office européen des brevets

(11) Numéro de publication : **0 117 161**
B1

# (12) FASCICULE DE BREVET EUROPÉEN

(45) Date de publication du fascicule du brevet :
22.10.86

(51) Int. Cl.⁴ : **H 04 N 11/02**, H 04 N 7/13

(21) Numéro de dépôt : **84400029.9**

(22) Date de dépôt : **06.01.84**

(54) Procédé et dispositif de codage numérique d'une image, notamment de télévision.

(30) Priorité : **06.01.83 FR 8300144**

(43) Date de publication de la demande :
**29.08.84 Bulletin 84/35**

(45) Mention de la délivrance du brevet :
**22.10.86 Bulletin 86/43**

(84) Etats contractants désignés :
**DE GB IT NL**

(56) Documents cités :
**GB-A- 2 079 567**
**US-A- 4 281 312**
**US-A- 4 302 775**
**RECONNAISSANCE DES FORMES ET TRAITEMENT DES IMAGES, congrès AFCET-IRIA, 21-23 février 1978, pages 699-714, Chatenay-Malabry, Institut de Recherche d'Informatique et d'Automatique, Le Chesnay, Paris, FR. G.E. LOWITZ; "Compression des données images par reconnaissance des formes et clustering"**
**RECONNAISSANCE DES FORMES ET TRAITEMENT DES IMAGES**
**NACHRICHTENTECHNISCHE ZEITSCHRIFT, no. 5, mai 1974, pages 176-181, Berlin, DE. F.J. IN DER SMITTEN: "Informationsreduzierende Quellencodierung von Farbbildsignalen auf der Basis optischer Valenzklassen"**

(73) Titulaire : **MATRA Société Anonyme**
**4, rue de Presbourg**
**F-75116 Paris (FR)**

(72) Inventeur : **Cassagne, Pierre**
**15 Quai Lombard**
**F-31000 Toulouse (FR)**
Inventeur : **Lowitz, Gabriel**
**18, Allée de la Grande Ourse Auzeuille**
**F-31320 Castanet Tolosan (FR)**

(74) Mandataire : **Fort, Jacques et al**
**CABINET PLASSERAUD 84, rue d'Amsterdam**
**F-75009 Paris (FR)**

## 0 117 161

### Description

L'invention est relative à un procédé ou à un dispositif de codage numérique d'une image, notamment une image de télévision, composée de points élémentaires (pels ou pixels) régulièrement répartis dans le plan de l'image, auxquels sont attribuées une ou plusieurs qualités radiométriques dénommées composantes $C_i$.

Ces composantes $C_i$ peuvent être, par exemple, les mesures des radiométries de chaque pixel dans N canaux spectraux fournies par des capteurs appropriés étagés dans le spectre de fréquences radioélectriques : visible, infrarouge, rayonnement X, etc... Ce peuvent être également, des quantités déduites des radiométries mesurées, dans un seul domaine spectral d'un arrangement spatial déterminé de pixels, par une transformation linéaire définissant N canaux indépendants.

La digitilisation d'une image pour son traitement ou sa transmission fait apparaître un volume d'informations très élevé dont la manipulation, si l'on veut conserver une fidélité acceptable, pose toujours un problème.

Dans l'exemple de la télévision en couleurs, on considère que la densité et la précision d'échantillonnage pour la reproduction pratiquement sans distorsion d'une image couleurs, nécessitent 6 millions de bits environ à raison de 16 bits par pixel. Le débit numérique d'une transmission télévisuelle sur cette base implique un canal de 170 M bits/seconde, soit l'équivalent de 2 500 communications téléphoniques. C'est un rapport qui est prohibitif au niveau des coûts actuels et qui pénaliserait lourdement l'économie d'un tel système de transmission.

On a donc été amené à évaluer des traitements numériques destinés à réduire ce débit et, pour ce faire, à éliminer dans la mesure du possible la redondance du message. Il s'agit pratiquement, d'éviter la répétition des informations déjà transmises tant que les variations constatées, dans l'espace ou dans le temps entre échantillons voisins, sont inférieures à certaines valeurs définies en relation avec le niveau de qualité souhaitée (rapport signal à bruit, structures et fluctuations indésirables, sensibilité aux erreurs, etc.).

De nombreuses propositions, faisant appel aux techniques de codage différentiel, aux transformations orthogonales, aux codages statistiques et à leur combinaison, ont été expérimentées avec des succès divers, sans qu'aucune cependant se révèle totalement satisfaisante. On a également proposé (G. LOWITZ, « Reconnaissance des formes et traitement des images », Congrès AFCET-IRIA, 21-23 février 1978, pp. 699-714) un procédé mettant en œuvre une technique fréquemment désignée par le terme anglo-saxon « clustering ». Suivant ce procédé de codage numérique d'une image, notamment une image de télévision, on détermine, dans l'image, des fenêtres ayant une forme géométrique prédéterminée et comprenant un certain nombre de points élémentaires ; on effectue, pour chaque fenêtre, des regroupements en classes de radiométries (spectrales ou spatiales) des extrémités des vecteurs représentatifs des pixels ou des combinaisons de pixels de l'image, dans l'espace à N dimensions selon un critère de proximité ; on définit pour chaque classe, à partir des valeurs individuelles des pixels qui la constituent, N radiométries typiques qui seront stockées ou transmises pour être utilisées à la reconstruction de l'image ; on stocke ou transmet également, pour définir chaque pixel, un code caractéristique de la classe à laquelle il appartient, permettant de lui affecter les radiométries typiques correspondantes pour la reconstruction de l'image.

L'invention a pour but, surtout, de fournir un procédé et un dispositif de codage numérique des images qui ne présentent plus, ou à un degré moindre, les inconvénients rappelés ci-dessus et qui permettent notamment d'obtenir un taux de compression élevé.

Dans ce but, l'invention propose un procédé caractérisé en ce que l'on effectue un traitement de hautes fréquences spatiales, par une transformation unitaire dont l'un des coefficients, celui de la valeur moyenne correspondant à des fréquences spatiales plus basses, est associé aux composantes de canaux spectraux différents pour traitement par une classification complémentaire.

La notion de proximité dont on utilise une mesure comme critère de regroupement des pixels en classe doit être prise dans un sens très large qui sera précisé selon une application du procédé, comme on le verra par la suite. La métrique qui lui est associée doit en effet prendre en considération le ou les critères de qualité essentiels à une reconstruction « satisfaisante de l'image, qui peuvent être sensiblement différents selon le but recherché (par exemple, fidélité des contours, rendu des demi-teintes, forte différentiation des textures ou des couleurs, etc.) dans l'application envisagée. ·

Le critère de proximité peut être, par exemple, la distance, selon la métrique classique, dans l'espace à N dimensions entre l'extrémité du vecteur représentatif d'un pixel et l'extrémité d'un vecteur représentant une classe ; dans ce cas, on peut établir, pour chaque fenêtre, plusieurs classes identifiées · par un vecteur dont les N composantes correspondent à des valeurs prédéterminées des radiométries pour chaque canal de l'image ; on calcule, pour chaque pixel, la distance dans l'espace à N dimensions entre l'extrémité du vecteur représentatif de ce pixel et l'extrémité de chaque vecteur représentant une classe ; on compare les distances ainsi obtenues pour chaque pixel et on range ce pixel dans la classe correspondant à la distance obtenue la plus faible ; on stocke ou on transmet, d'une part, pour chaque pixel, un code permettant d'identifier la classe où il a été rangé et, d'autre part, un dictionnaire donnant, pour chaque classe, les composantes des vecteurs représentant cette classe, obtenues par calcul à partir des différents pixels lui appartenant.

2

Ce procédé trouve son fondement dans les caractéristiques des images naturelles qui montrent la possibilité de grouper les pixels (points élémentaires) d'une sous-image (ou fenêtre) arbitrairement délimitée en un nombre restreint de classes judicieusement choisies. Chaque pixel peut dès lors être qualifié par un code à faible nombre de bits dont la signification est donnée par la table de conversion spécifique (dictionnaire) de la sous-image traitée.

Il s'agit donc de trouver, dans l'histogramme des radiométries d'une fenêtre (ou sous-image), des groupes de points, rangés dans une classe déterminée, dont les valeurs radiométriques initiales peuvent valablement être remplacées par un groupe de valeurs radiométriques correspondant à celle de la classe.

Au lieu de transmettre ou de stocker pour chaque pixel, ou combinaison de pixels, les valeurs radiométriques trouvées, on lui fait correspondre un code (le numéro de la classe dans laquelle il a été rangé) dont le nombre est beaucoup plus restreint que l'ensemble des radiométries possibles. Il suffit, pour rendre le message intelligible, d'ajouter à chaque fenêtre (ensemble de classes) un dictionnaire où chaque code de classe est explicité par ses radiométries correspondantes.

Pour permettre une compression notable, il convient de traiter des sous-images (fenêtres) de volume suffisant pour que la transmission du dictionnaire de la table de conversion puisse être considérée comme marginale dans le volume global du message.

De préférence, pour une fenêtre déterminée, après avoir effectué une première classification des points élémentaires dans des classes prédéterminées, et calculé, pour chaque classe, à partir des points qui ont été rangés dans cette classe, des radiométries typiques des points, on effectue une nouvelle classification de chaque point élémentaire, dans de nouvelles classes basées sur les radiométries calculées, cette opération d'itération étant répétée autant de fois que nécessaire pour obtenir une précision prédéterminée.

On recherche ainsi, par une méthode adaptative, la meilleure radiométrie représentative de chaque groupe de pixels rangés dans une classe de manière à n'introduire qu'une erreur négligeable dans le bilan énergétique de la transformation.

Il est clair que l'efficacité d'une telle classification est intimement liée aux propriétés statistiques de l'image aussi bien dans la distribution énergétique spectrale que spatiale. Il convient, pour tirer le meilleur bénéfice de ces statistiques, d'appliquer le procédé à des données homogènes, c'est-à-dire caractérisant l'un ou l'autre de ces domaines indépendamment. On pourra, par exemple, s'intéresser aux diverses composantes $C_i$ d'un même pixel dans des canaux spectraux différents et former les classes selon un critère de similarité spectrale. On peut aussi, en monochrome, définir les N canaux se référant à une distribution spatiale des pixels ou combinaison de pixels dans un groupe de forme convenable. Ce procédé peut en effet s'avérer moins efficace si les deux types de données spectrales et spatiales sont classés simultanément en faisant ainsi intervenir deux natures de statistiques différentes.

Le traitement de hautes fréquences spatiales généralement panchromatiques, par une transformation unitaire dont l'un des coefficients, celui de la valeur moyenne correspondant à des fréquences spatiales plus basses, est associé aux composantes de canaux spectraux différents pour traitement par une classification complémentaire telle que décrite précédemment, apporte une solution à ce problème.

Pratiquement, dans le cas de la télévision en couleurs, et pour tirer le meilleur parti de l'image, on procède comme suit : on réunit plusieurs points élémentaires et on détermine, pour chaque réunion, une valeur moyenne des composantes de luminance et de chrominance $[(Y)_M \ (R-Y)_M, \ (B-Y)_M]$ à partir de chaque composante de chaque point élémentaire de la réunion ; on effectue les opérations de classification évoquées précédemment ; et, pour une reconstruction de tous les points élémentaires à la réception, on applique aux signaux de luminance (Y), de chacun des points élémentaires d'une réunion, une transformation linéaire permettant de réduire le volume d'informations à transmettre, et l'on transmet les valeurs des coefficients complémentaires résultant de cette transformation et, à la réception, on effectue une expansion d'information en déduisant à partir des valeurs moyennes transmises $[Y_M \ (R-Y)_M \ (B-Y)_M]$ et des valeurs transformées également transmises, les valeurs de luminance et de chrominance pour chaque point élémentaire d'un groupe.

La réunion des points peut porter sur quatre ou seize pixels contigus, qui sont groupés selon le type de sondage : orthogonal, quinconce ou trame, qui peut avoir été choisi.

On définit ainsi deux domaines conjoints complémentaires en choisissant pour chacun d'eux le mode de codage le mieux adapté à leur nature.

Le premier domaine constitue un sous-ensemble polychrome dont chaque point correspond au point moyen d'une réunion et comporte des composantes obtenues avec une densité de sondage plus faible.

Le second domaine, nécessaire pour une reconstruction à pleine résolution, est constitué à partir des hautes fréquences du signal de luminance Y seul sans aucune information de chromaticité.

Avantageusement, la transformation unitaire utilisée est une transformation de Walsh-Hadamard.

La fenêtre est constituée avantageusement par au moins une ligne horizontale ; dans le cas d'une image de télévision, il est intéressant de former la fenêtre à l'aide de deux lignes contiguës. Avantageusement, le nombre de classes est égal à trente-deux.

L'invention est également relative à un dispositif pour la mise en œuvre du procédé défini précédemment ; un tel dispositif est caractérisé par le fait qu'il comprend :

— des moyens pour déterminer une fenêtre dans l'image en couleurs et pour balayer toute l'image par cette fenêtre ;

— des moyens d'acquisition des valeurs relatives à chaque point élémentaire d'une fenêtre ;

— des moyens de calcul des distances de l'extrémité du vecteur correspondant à un point élémentaire ou à un point moyen de la réunion de plusieurs points élémentaires, aux extrémités des vecteurs identifiant chaque classe ;

— des moyens comparateurs permettant de ranger chaque point élémentaire ou chaque point moyen dans la classe correspondant à la plus faible distance calculée ;

— et des moyens de calcul des composantes du vecteur identifiant une classe à partir des différents points lui appartenant, la sortie de ce dispositif étant reliée aux moyens de transmission des données de sortie.

L'invention consiste, mises à part les dispositions exposées ci-dessus, en certaines autres dispositions dont il sera plus explicitement question ci-après à propos de modes de réalisation particuliers décrits en détail avec référence aux dessins ci-annexés.

### Description sommaire des dessins

La Figure 1 est un schéma illustrant le procédé de l'invention ;

la Figure 2 est un schéma synoptique d'un dispositif pour la mise en œuvre de ce procédé ;

la Figure 3 est un schéma illustrant la réunion de plusieurs points élémentaires suivant un sondage orthogonal ;

les Figures 4 à 6 sont des schémas de traitement d'images successives ;

la Figure 7 est un organigramme du dispositif pour la mise en œuvre du procédé ;

les Figures 8 à 12 sont des schémas synoptiques plus détaillés de blocs du schéma de la figure 7 ;

la Figure 13 est un schéma synoptique des moyens utilisés pour le décodage des données fournies après classification ;

la Figure 14, enfin, est un schéma synoptique d'un opérateur pour la transformation linéaire.

### Description détaillée de modes de réalisation

La description qui suit va être donnée, essentiellement avec référence à des images de télévision en couleurs, basée sur une analyse de l'image en trichromie dans trois primaires « rouge » « verte » « bleue » alimentant trois canaux indépendants, pour des raisons de simplification ; la combinaison de ces trois primaires R, V, B fournit la luminance Y.

Dans cet exemple, le nombre N de canaux est donc égal à trois.

Toutefois, le procédé et le dispositif de l'invention conviennent pour le traitement d'images avec un nombre de canaux inférieur ou supérieur à trois.

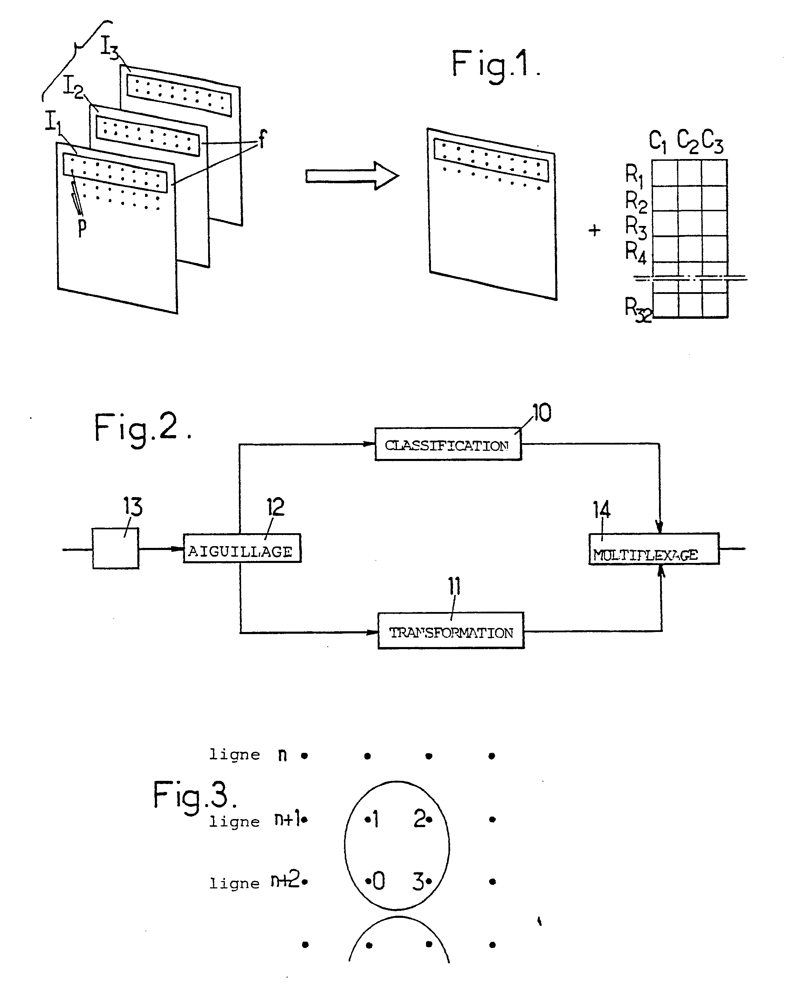

L'image de télévision en couleurs peut être considérée comme la combinaison de trois images primaires I1, I2, I3, représentées schématiquement sur la gauche de la figure 1 correspondant aux trois canaux. Chaque image se compose de pixels p répartis suivant des lignes ; les pixels de l'image I1 sont affectés des valeurs de radiométrie pour le premier canal, ceux de l'image I2 sont affectés des valeurs de radiométrie pour le second canal, et ceux de l'image I3 sont affectés des valeurs de radiométrie pour le troisième canal.

### Compression par classification

On détermine, dans l'image, des fenêtres f ayant une forme géométrique prédéterminée et comprenant un certain nombre n de pixels p. On établit, pour chaque fenêtre f, plusieurs classes R1, R2,... schématiquement représentées, sur la droite de la figure 1, par des rangées. Chaque classe est identifiée par un vecteur d'un espace à trois dimensions ($N = 3$) dont les composantes correspondent à des valeurs prédéterminées des radiométries C1, C2, C3 pour chaque canal de l'image.

On calcule, pour chaque pixel de la fenêtre f, la distance D, dans l'espace à trois dimensions, entre l'extrémité du vecteur représentatif de ce pixel et dont les composantes sont constituées par les radiométries affectées à ce pixel dans les trois canaux considérés, et l'extrémité de chaque vecteur identifiant une classe.

En fait, ce calcul devra être effectué en tenant compte de la nature de l'application, ici la Télévision en couleurs où la qualité de l'image reproduite est jugée par un observateur humain dont l'œil présente des caractéristiques très particulières quant à la « fidélité subjective » de la reproduction. On pourra, en particulier, adopter dans l'espace à trois dimensions Y, $R - Y$, $B - Y$, des métriques non linéaires différentes adaptées à la sensibilité différentielle de l'œil humain selon chacun de ces axes. Par exemple, la loi de Weber Fechner précise cette sensibilité différentielle selon l'axe des luminances pour lequel une échelle logarithmique sera mieux adaptée qu'une échelle linéaire et permettra de calculer des « distances subjectives » plus satisfaisantes. On pourra donc effectuer sur les radiométries de chacun des canaux de telles conversions, à l'aide de tables si l'on ne dispose pas d'une loi mathématique simple de transformation, avant de calculer la distance euclidienne dans l'espace transformé.

Par exemple, pour la classe R1, si l'on désigne par C11, C21, C31, les composantes du vecteur identifiant cette classe et par $\gamma 1i$, $\gamma 2i$, $\gamma 3i$, les radiométries du ième pixel, la distance du vecteur représentant ce ième pixel au vecteur identifiant la classe R1 sera définie par : $(D1i)^2 = (C11 - \gamma1i)^2 + (C21 - \gamma2i)^2 + (C31 - \gamma3i)^2$.

Pour ce ième pixel, on calcule les distances relatives à toutes les classes, avantageusement au nombre de 32. On obtiendra donc 32 distances calculées D1i ... D32i.

On compare ensuite ces 32 distances de manière à déterminer la distance la plus faible et on range ce ième pixel dans la classe correspondant à cette plus faible distance, par exemple la classe R4.

Par la suite, on transmettra, pour ce ième pixel, uniquement un code permettant d'identifier la classe R4 où il a été rangé.

Ce code n'exige qu'un nombre de bits réduit par rapport à celui qui aurait été nécessaire pour transmettre les trois radiométries correspondant à ce ième pixel.

On transmet, en outre, un dictionnaire donnant, pour chaque classe R1,... R32, les composantes C'1, C'2, C'3, du vecteur identifiant cette classe. Ces composantes transmises C'1, C'2, C'3, sont obtenues par calcul, notamment calcul du barycentre, à partir des différents points appartenant à la classe.

Le procédé permet donc de faire correspondre aux trois fenêtres f (correspondant à chaque radiométrie primaire) de chacune n pixels, une carte unique de n codes, associés à un dictionnaire où chaque code est explicité par les trois composantes (N composantes d'une manière plus générale) du vecteur identifiant la classe correspondant au code. De préférence, ces composantes correspondent à celles du barycentre des points rangés dans la classe considérée. Ces composantes pourraient cependant être déterminées par un autre mode de calcul (différent de celui du barycentre), à partir des points rangés dans la classe.

Le schéma de la figure 1 résume ces opérations.

La classification, c'est-à-dire le rangement des pixels dans des classes déterminées, utilise une procédure par laquelle on regroupe, dans un nombre limité de « classes », des pixels dont l'ensemble des composantes rouge, verte et bleue sont voisines et peuvent être confondues.

Ces classes ne sont pas définies arbitrairement mais adaptées à l'histogramme à trois dimensions des radiométries d'une fenêtre f (ou sous-image) découpée dans l'image d'origine. Si le nombre de pixels de la fenêtre f n'est pas trop élevé et si le nombre de classes n'est pas trop faible, on peut, en affectant à chaque pixel la valeur moyenne des radiométries de la classe dans laquelle il est rangé, reconstituer une sous-image très voisine de l'original.

En procédant ainsi de proche en proche, par déplacement régulier de la fenêtre f pour balayer l'ensemble de l'image, on peut assurer la transmission du message avec une dégradation d'information très réduite.

Ce procédé permet une réduction notable du volume binaire du message par rapport à celui résultant de la numérisation des trois composantes rouge, verte et bleue.

En supposant qu'on réalise des fenêtres f comportant chacune 1 024 pixels, caractérisés chacun par trois radiométries codées à huit bits, le volume initial est :

$$3 \times 8 \times 1\,024 = 24 \text{ Kbits.}$$

Avec le procédé de l'invention, on classe ces mêmes pixels dans trente-deux classes radiométriques différentes R1,... R32 et on désigne chaque pixel par le code (numéro) de la classe où il est rangé ; il suffira de cinq bits pour coder les trente-deux classes en question. On délivrera donc un premier message de $5 \times 1\,024$ bits.

Ce premier message est complété par le dictionnaire donnant la signification radiométrique de chacun des codes ; pour chaque code, il faudra transmettre trois radiométries mesurées chacun par huit bits, c'est-à-dire :

$$32 \times 3 \times 8 = 768 \text{ bits supplémentaires.}$$

Finalement, avec le procédé qui vient d'être décrit, on transmettra :

$$(5 \times 1\,024) + 768 = 5\,888 \text{ bits.}$$

Par rapport à la transmission du message initial, le procédé donne un taux de compression de :

$$(24 \times 1\,024)/5\,888 = 4,17 \text{ environ.}$$

Cette valeur suffisamment élevée justifie le codage à l'émission et le décodage à la réception.

Le nombre de classes est un facteur important de la finesse de la classification et, par conséquent, de l'aptitude à approximer au mieux les valeurs radiométriques de l'original. Un nombre trop élevé de classes cependant diminue le taux de compression en raison du nombre de bits du code nécessaire pour numéroter chacune des classes. il peut être avantageux de disposer d'un nombre de classes variable adapté à l'histogramme des radiométries de la fenêtre avec, en contrepartie, l'inconvénient d'un code à nombre de bits variables selon les fenêtres f, ce qui implique un mode de transmission à régulation de débit peu souhaitable.

**0 117 161**

On prendra généralement un nombre de classes fixe et correspondant à une puissance de 2 ; dans l'exemple envisagé, on a choisi $32 = 2^5$ pour fixer la longueur du code à cinq bits. Cette valeur s'est révélée acceptable pour un grand nombre d'images de nature très différente. Elle est cependant fonction d'un deuxième paramètre, à savoir le nombre de pixels constituant la fenêtre f de traitement ; ce nombre, sans être critique, influe sur la qualité de reproduction si le nombre de classes est limité. Il est clair que la variance d'une classe croît généralement avec le nombre de pixels lui appartenant, ce qui traduit une classification de plus en plus abusive. Il faut, cependant, un nombre de pixels suffisant pour permettre une bonne adaptation à la statistique de l'image. On a trouvé expérimentalement que des fenêtres f de quelques centaines de pixels correspondent à un bon compromis.

La forme de la fenêtre découpée dans l'image peut être variable pour autant qu'elle intéresse des zones contiguës où la redondance spatiale est maximale. Pour des images de télévision, dont la distribution spatiale est convertie en distribution sérielle dans le temps, il est intéressant de constituer les fenêtres à partir des lignes de balayage de l'image ; c'est pourquoi dans l'exemple évoqué précédemment, on a indiqué que la fenêtre f est formée par deux lignes contiguës. On peut alors traiter successivement l'ensemble des pixels d'une ou plusieurs lignes dans un format récurrent et continu qui facilite la mise en œuvre du procédé.

Le nombre de pixels de la fenêtre peut ainsi varier entre 300 et 1 500, selon la finesse de sondage nécessaire, dans les limites convenables pour une bonne statistique des radiométries.

Pour une fenêtre déterminée f, après avoir effectué une première classification des n pixels dans les 32 classes R1,... R32, on calcule, pour chaque classe R1,... à partir des pixels qui ont été rangés dans cette classe, le barycentre de ces pixels. On peut effectuer une nouvelle classification de chaque pixel de la fenêtre dans les 32 nouvelles classes basées sur les barycentres ainsi calculés. Cette opération d'itération est répétée autant de fois que nécessaire pour obtenir une précision déterminée.

Par exemple, si q est le nombre de pixels rangés dans la classe R4 qui, lors du premier passage était identifiée par un vecteur dont les composantes étaient C14, C24, C34, le calcul du barycentre, après le premier passage va conduire à identifier la classe R4 par un nouveau vecteur dont les composantes seront :

$$C'14 = \frac{\sum_{i=1}^{i=q} \gamma 1i}{q}$$

$$C'24 = \frac{\sum_{i=1}^{i=q} \gamma 2i}{q}$$

$$C'34 = \frac{\sum_{i=i}^{i=q} \gamma 3i}{q}$$

Les valeurs $\gamma 1i$, $\gamma 2i$, $\gamma 3i$ correspondent aux trois composantes de chacun des q pixels contenus dans la classe $R_4$.

On engage ainsi une phase d'adaptivité en recalculant les barycentres de chacune des classes qui serviront pour le passage suivant d'itération en vue d'améliorer le classement des pixels de la fenêtre par rapport à ces nouveaux barycentres. On peut affiner le résultat par des itérations successives dont la convergence est rapide.

Lorsque le classement des pixels de la fenêtre est terminé, on effectue la transmission des codes, pixel par pixel, dans l'ordre prédéterminé par le balayage, puis le dictionnaire relatif à ces codes est transmis ; selon une variante, on peut transmettre le dictionnaire relatif aux codes en premier, puis les codes pixel par pixel.

L'opération est renouvelée pour la fenêtre suivante et ainsi de suite jusqu'à la fin de l'image. On voit que l'algorithme de classement utilisé exige une initialisation des classes R1 ... R32 qui peut être obtenue par exemple par une distribution régulière dans l'espace.

Il est avantageux d'utiliser des résultats de calcul antérieurs comme base d'initialisation de la classification suivante pour bénéficier de la forte corrélation spatiale d'une ligne à la suivante, ou de la corrélation temporelle d'une image à la suivante. En particulier, on pourra traiter plus efficacement la première ligne de l'image en utilisant les barycentres obtenus lors de la classification de la même ligne de l'image précédente dans le temps.

Les systèmes de télévision analogique constituent des cadres bien définis par leur norme de balayage (cadence, nombre de lignes), le codage couleurs (NTSC, SECAM, PAL) et de radiodiffusion qu'il est souhaitable de conserver au moins à un certain niveau sous peine de devoir introduire des appareillages compliqués pour l'interface compatible. La télévision numérique s'adapte mieux aux

6

besoins des utilisateurs en conservant le découpage sériel en lignes successives d'analyse et, pour la couleur, en traitant en parallèle trois composantes caractéristiques Y, R — Y, B — Y, pour chaque pixel, définies à partir des composantes primaires rouge (R) verte (V) et bleue (B) par les relations suivantes :

$$Y = 0,59\ V + 0,30\ R + 0,11\ B$$
$$R — Y = 0,70\ R — 0,59\ V — 0,11\ B$$
$$B — Y = 0,89\ B — 0,59\ V — 0,30\ R.$$

Le signal Y, ou signal de luminance, peut être considéré comme la version panchromatique de l'image ; les deux autres signaux R — Y et B — Y sont spécifiques de la chromaticité.

Cette répartition de l'information permet une discrétisation du message en effectuant un sondage périodique de ces trois signaux à des cadences régulières (13,5 MHz pour Y ; 6,75 MHz pour R — Y et B — Y) de manière à numériser à 256 niveaux (8 bits) leurs valeurs sans dégradation sensible de qualité. Ceci correspond à 720 pixels de luminance Y pour la partie active de la ligne de balayage.

On voit que le sondage de la chromaticité est effectué avec une densité moitié de celle de la luminance Y, soit 360 échantillons R — Y et 360 échantillons B — Y, mais reste largement suffisant cependant pour le niveau de qualité recherché.

On peut considérer que ce format conduit à étendre la chromaticité d'un pixel i au pixel i + 1 suivant dans la ligne ou, si l'on préfère, à assimiler le pixel de chromaticité à un rectangle recouvrant deux pixels de luminance adjacents.

La même assimilation dans le sens vertical peut être faite, ce qui conduit à un sondage de chromaticité quatre fois moins dense que celui de la luminance Y, mais encore très suffisant pour des images naturelles. On sait d'ailleurs que la reproduction n'exige pas une définition aussi élevée pour la chrominance que pour la luminance.

## Différence de traitement entre luminance et chrominance

Pour tirer le meilleur parti de la redondance de l'image, on définit deux domaines conjoints et complémentaires en choisissant pour chacun d'eux le mode de codage le mieux adapté.

1. Le premier domaine constitue un sous-ensemble trichrome dont chaque pixel comporte les trois composantes Y, R — T, B — Y obtenues avec une densité de sondage quatre fois plus faible que celle de Y. Ce premier domaine décrit une image précise des basses fréquences spatiales des trois images R, V, B de l'analyse trichrome.

Les quantités transmises $Y_M$, $(R — Y)_M$ et $(B — Y)_M$ sont les composantes du vecteur dont on va effectuer la classification selon le procédé expliqué précédemment, pour ce premier domaine.

Pour chaque fenêtre, on transmettra deux messages :

— la suite des codes des pixels successifs, ces codes permettant d'identifier la classe dans laquelle chaque pixel a été rangé ;

— le dictionnaire donnant la correspondance entre le code de chaque classe et les valeurs de $Y_M$, $(R — Y)_M$ et $(B — Y)_M$ du modèle, pour permettre la reconstruction de l'image basse fréquence.

2. Le second domaine nécessaire pour une reconstruction de l'image à pleine résolution va être constitué à partir des hautes fréquences du signal de luminance Y seul, sans aucune information de chromaticité.

Une bonne approximation du signal $Y_M$ est obtenue en faisant la moyenne des luminances d'une réunion de plusieurs pixels contigus du sondage Y initial. Avantageusement, on réunit 4 pixels selon le type de sondage orthogonal comme représenté sur la figure 3 ; les pixels numérotés 0 et 1 sont situés respectivement aux lignes n + 2 et n + 1 sur une même verticale ; les pixels 3 et 2 sont situés sur les lignes n + 2 et n + 1 immédiatement à droite du pixel 0 et 1.

La réunion des pixels pourrait se faire selon un autre type de sondage par exemple quinconce ligne ou quinconce trame.

Si l'on désigne par $Y_0$, $Y_1$, $Y_2$, $Y_3$ les luminances des pixels 0, 1, 2 et 3, la valeur moyenne $Y_M$ sera :

$$Y_M = \frac{Y_0 + Y_1 + Y_2 + Y_3}{4}.$$

Les autres quantités $(R — Y)_M$ et $(B — Y)_M$ sont obtenues à partir des valeurs moyennes de chrominance des pixels de la réunion effectuée avec :

$$(R - Y)_M = \frac{1}{2}[(R - Y)_1 + (R - Y)_0]$$

$$(B - Y)_M = \frac{1}{2}[(B - Y)_1 + (B - Y)_0].$$

7

**0 117 161**

En effet, le sondage pour les composantes caractéristiques R — Y et B — Y est effectué à une cadence (6,75 MHz) moitié de celle du sondage Y (13, 5 MHz) et l'on considère que les pixels 2 et 3 de la réunion de quatre pixels représentée sur la figure 3 ont les mêmes caractéristiques de chrominance que les pixels immédiatement voisins 1 et 0 du sondage.

### Transformation unitaire préalable sur les signaux de luminance

En vue d'une reconstruction de tous les pixels à la réception, on applique aux signaux de luminance Y de chacun des pixels d'une réunion effectuée comme représenté sur la figure 3, une transformation unitaire permettant de réduire le volume d'information à transmettre, tandis qu'à la réception, on effectue une expansion d'information pour reconstituer chaque point élémentaire.

La transformation linéaire utilisée est avantageusement une transformation de Walsh-Hadamard. Elle sera envisagée appliquée à la réunion des quatre pixels 0, 1, 2 et 3 de la figure 3, mais elle peut aussi bien être appliquée à la réunion de seize pixels répartis dans une matrice carrée par exemple.

La luminance moyenne $Y_M$ est égale à la moitié de la première composante $WH_0$ de cette transformation puisque :

$$WH_0 = 1/2\ (Y_0 + Y_1 + Y_2 + Y_3) = Y_M.$$

On code les quatre valeurs $Y_0$, $Y_1$, $Y_2$ et $Y_3$ en leur appliquant la transformation évoquée, c'est-à-dire que l'on complète la description de Y par les trois composantes complémentaires représentatives des hautes fréquences :

$$WH_1 = 1/2\ (Y_2 + Y_3 - Y_1 - Y_0)$$
$$WH_2 = 1/2\ (Y_2 - Y_3 - Y_0 + Y_1)$$
$$WH_3 = 1/2\ (Y_2 - Y_3 + Y_0 - Y_1)$$

On peut remarquer que les valeurs moyennes de chrominance correspondent à la première composante de la transformée de Walsh-Hadamard, c'est-à-dire au terme de basse fréquence qui est donc seul utilisé.

L'avantage de ce type de codage réside dans la décorrélation des coefficients qui en résulte, ce qui assure une réduction de la redondance spatiale sur le groupe de quatre pixels 0, 1, 2, 3. On peut ainsi réduire le volume d'informations à transmettre en introduisant une codification adaptée à chacun de ces coefficients $WH_1$, $WH_2$, $WH_3$, grâce à une attribution de bits optimisés pour chacun.

L'expérience montre, en effet, que l'histogramme des valeurs de ces coefficients dans une image présente une décroissance rapide, d'allure exponentielle, en fonction de leur amplitude si bien qu'il est avantageux d'établir une loi de quantification à échelons non linéaires permettant d'affecter les codes aux valeurs les plus probables. La reconstruction postérieure fait apparaître des erreurs mais l'écart quadratique moyen peut être maintenu dans des limites acceptables si l'on choisit une loi bien adaptée à l'échantillon des valeurs de la fenêtre à considérer.

L'objectif d'un taux de compression élevé conduit à des dispositions particulières pour obtenir une bonne adaptation à la statistique de la distribution des valeurs dans chaque fenêtre.

Une possibilité consiste à définir des tables de quantification non linéaires typiques mais judicieusement sélectionnées, éventuellement à nombre de niveaux et nombre de bits variables, et à choisir parmi elles celle qui permet d'obtenir le meilleur résultat c'est-à-dire la reconstruction la plus fidèle de la fenêtre. Il faut alors disposer de l'ensemble des tables de reconstruction et indiquer, par un code spécial, affecté à chaque fenêtre, celle dont la loi a été choisie au codage pour quantifier les coefficients des groupes de pixels de la fenêtre.

Une autre solution, un peu plus coûteuse en volume binaire, mais permettant une adaptation plus fine à la distribution réelle des coefficients $WH_1$, $WH_2$, $WH_3$ de la fenêtre consiste à effectuer, sur chacun d'eux, une classification analogue à celle des basses fréquences trichromes. Il s'agit seulement ici de regrouper en classes des grandeurs à une dimension et non des vecteurs à plusieurs dimensions ce qui simplifie les calculs mais la procédure reste la même :
— initialisation des classes,
— regroupement par classe des valeurs de la fenêtre,
— calcul de la moyenne de chaque classe,
— itération.

On devra donc transmettre, pour chaque groupe de pixels de la fenêtre, trois codes correspondant à $WH_1$, $WH_2$ et $WH_3$, ainsi qu'un dictionnaire spécifique de chaque fenêtre fournissant les valeurs moyennes de reconstruction de chaque classe, à utiliser selon le code.

Une distribution de bits ayant donné de bons résultats consiste à affecter 8 classes et donc un code à 3 bits ($8 = 2^3$) à chacun des coefficients $WH_1$ et $WH_2$, 2 classes seulement, nécessitant un code à un seul bit, suffisent pour le coefficient $WH_3$ dont la dynamique est sensiblement plus faible.

Au total $(2 \times 3) + 1 = 7$ bits sont nécessaires par réunion de 4 pixels, ces 7 bits devant être complétés par le dictionnaire des $(2 \times 8) = 16$ classes (environ 64 bits) de $WH_1$ et $WH_2$ et de la valeur moyenne du module de $WH_3$. En effet, le bit unique transmis pour $WH_3$ est un bit de signe.

On peut noter, à ce stade de la description, donnée à titre d'exemple, que la combinaison des codages du domaine trichrome et du domaine des hautes fréquences de luminance peut être paramétrée différemment selon le type d'application, les débits numériques acceptables ou modalités de réalisation, sans toutefois sortir du cadre de l'invention.

Il peut s'avérer souhaitable, par exemple, en vue de préserver la qualité de manipulations ultérieures, de pouvoir disposer, après codage, et décodage de la pleine résolution chromatique de l'image, c'est-à-dire celle correspondant à un échantillonnage de toutes les composantes à 13,5 MHz. On devra alors traiter tous les pixels comme faisant partie de l'espace trichrome sans aucune transformation complémentaire de l'espace luminance.

La classification portera sur les valeurs Y, R — Y, B — Y de chaque pixel (ou R, V, B) fournissant 720 codes par ligne d'analyse et un dictionnaire des valeurs représentatives de chaque classe par fenêtre. Il sera alors avantageux de définir la fenêtre en question comme une ligne d'analyse unique au lieu d'un couple de deux lignes, comme précédemment, pour éviter la mémorisation d'une trame de balayage.

Du fait de l'analyse par balayage entrelacé de l'image télévisuelle, en effet, on doit disposer, pour les 2 modes de traitement, classification et transformation, d'une fenêtre formée par 2 lignes contiguës, des valeurs relatives à deux trames successives auxquelles appartiennent respectivement les lignes n + 1 et n + 2 de la figure 3. On prévoit donc le chargement et la lecture d'une mémoire d'image pour chacune des composantes Y, R — Y et B — Y d'une trame chargée et lue en temps réel en même temps que le canal délivre le flux correspondant de la trame suivante. Il en résulte un délai global d'une trame soit 20 m sec. entre l'entrée et la sortie d'une image dans le système de codage. Diverses stratégies peuvent être envisagées selon le débit du canal de transmission, l'architecture des moyens de codage et de décodage et leur niveau de complexité.

A titre d'exemple, on peut concevoir un système où l'image est rafraîchie à la cadence trame du signal télévision, soit 50 par seconde, c'est-à-dire en transmettant de façon continue, au rythme d'entrée des pixels, les diverses composantes de classification trichrome basse fréquence et la transformation WH (Walsh-Hadamard) de haute fréquence.

Dans ces conditions, on dispose également en permanence à la réception de tous les signaux nécessaires à la reconstruction sans avoir besoin de moyens de stockage important. Il en résulte, en contrepartie, un débit numérique relativement élevé parce que redondant dans le domaine temporel.

### Variante

On peut aussi envisager, si la finesse de résolution chromatique peut être notablement inférieure à celle de la luminance, d'appliquer une transformation unitaire d'ordre supérieur à 2 au domaine des hautes fréquences de luminance en réunissant par exemple 16 pixels de luminance dans un ensemble $4 \times 4$ dont la valeur moyenne sera codée avec les composantes chromatiques correspondantes par classification. Une autre solution peut aussi consister à conserver la transformation d'ordre 2 et la classification d'une réunion de 4 pixels mais choisis sur la même trame d'analyse entrelacée ce qui évite également la mémorisation.

Dans une autre conception préférée, on pourra, au contraire, découper le message entre les deux modes décrits et, par exemple, pendant une trame fournir les composantes de classification, la trame suivante étant affectée à la transmission de l'autre sous-ensemble de composantes HF. Si l'on s'arrange pour avoir deux sous-messages de volume équivalent, le débit de transmission est divisé par 2, mais la reconstruction implique l'utilisation pendant deux trames de chacun des sous-ensembles qui devront être stockés temporairement. Le rafraîchissement de l'image est alors celui de la cadence de deux trames soit 25 par seconde.

La fenêtre de description f donnée en exemple et constituée de deux lignes contiguës sur l'image (l'une appartenant à la trame paire, l'autre à la trame impaire) permet de respecter, autant que possible, la segmentation déjà imposée par le balayage d'analyse du standard de télévision, aussi bien dans le temps que dans l'espace, et constitue une version préférée du système de transmission. On traite ainsi continûment les données au fur et à mesure de leur disponibilité, en parallèle, par deux opérateurs indépendants appliqués aux deux domaines basse fréquence trichrome et haute fréquence luminance. Ceci permet la plus grande souplesse dans l'organisation du format de transmission et, en particulier, permet sans difficulté, l'attribution du canal de transmission à l'un ou l'autre sous-message alternativement comme indiqué ci-dessus.

En outre, lorsque le débit du canal de transmission est suffisant, on peut aussi multiplexer les deux messages pour éviter les mémoires côté réception.

Dans la même optique, on peut définir, pour une fréquence de sondage donnée et pour chacun des sous-messages, un paquet de données de structure bien définie et de longueur fixe fournissant dans l'ordre naturel de succession des pixels, les codes de classification ou les composantes de WH de la ligne d'analyse correspondante au numéro du paquet dans la suite des données relatives à une trame complète. Cette possibilité garantit une grande sécurité de fonctionnement et présente l'avantage de ne nécessiter aucune régulation de débit en fonction du contenu de l'image.

Si la capacite de transmission est suffisante, il peut également s'avérer intéressant de respecter pour chaque paquet le cadencement de l'analyse à fréquence ligne du signal télévision. Le volume des blocs mémoire de stockage intermédiaire est ainsi minimé et l'intervalle de suppression de trame est conservé disponible pour d'autres messages tels ceux déjà existants dans le signal analogique.

On va considérer, maintenant, les dispositifs pour la mise en œuvre du procédé de l'invention.

Les opérations nécessaires au codage et au décodage d'une image peuvent être effectuées à l'aide de différents moyens selon les contraintes imposées par divers paramètres dont les plus importants sont la cadence de fourniture des pixels par le dispositif amont, le volume de composants électroniques acceptable, le niveau d'adaptabilité de l'équipement à des variations de paramètres fonction des conditions opérationnelles.

On peut, par exemple, si l'on accepte un temps de codage important, envisager un traitement entièrement effectué par un opérateur unique microprogrammable ou, au contraire, si l'on recherche la rapidité maximale, une combinaison d'opérateurs câblés montés en série-parallèle pour n'introduire aucune attente dans le flux de données entre chaque opération élémentaire. Entre ces deux possibilités extrêmes, toute une gamme de combinaisons mixtes peut être envisagée.

Comme représenté sur la figure 2, les diverses variantes entrant dans le cadre du procédé peuvent être réalisées à partir de deux sous-ensembles électroniques 10, 11 affectés, l'un 10 à la classification, l'autre 11, à la transformation, et fonctionnant dans deux voies parallèles.

Un dispositif 12 d'acquisition et de démultiplexage, situé en amont, sépare et aiguille, en fonction du temps selon la loi de codage définie, les diverses données vers la ou les voies convenables pour leur traitement. Ces données sont fournies par des moyens 13 pour déterminer la fenêtre et pour balayer l'image ; ces moyens 13 peuvent comprendre par exemple, une caméra vidéo combinée avec un convertisseur analogique/digital et des moyens de mémoire fournissant des mots de huit bits correspondant aux caractéristiques Y, R — Y, B — Y. On peut supposer que les données arrivent aux moyens d'acquisition 12 par un bus à vingt-quatre bits fournissant, à la cadence pour chaque pixel, les caractéristiques Y, R — Y et B — Y. Ces trois caractéristiques sont nécessaires pour le traitement de classification par 10 de l'espace trichrome alors que seule la première donnée Y intervient dans le traitement des hautes fréquences par 11.

Dans le cas où seule une classification serait effectuée (sans transformation), le sous-ensemble 10 serait seul à intervenir.

En sortie des sous-ensembles 10 et 11, un organe de multiplexage 14 des produits de codage permet de construire le message de transmission.

En ce qui concerne le traitement de classification trichrome, l'analyse des diverses opérations impliquées dans le codage d'une fenêtre fait apparaître deux types de procédures A, B.

D'une part, des opérations de type A (transformation unitaire) sont effectuées au niveau d'un pixel ou d'une réunion (telle que celle représentée sur la figure 3) de pixels.

D'autre part, des opérations dites de type B (« clustering ») sont appliquées à la fenêtre dans sa totalité.

En outre, ces deux types de procédure doivent être nécessairement effectués successivement car les résultats obtenus dans le premier type A doivent être complètement disponibles avant d'entamer le deuxième de type B. Enfin, comme il s'agit de préférence d'un dispositif itératif au niveau de la fenêtre, il faudra voir aussi totalement terminé le premier passage avant de pouvoir entamer le deuxième passage marqué par une nouvelle initialisation des composantes des vecteurs identifiant chaque classe de la fenêtre.

Au niveau des moyens pour réaliser ces opérations, on prévoit une cascade d'opérateurs formant une chaîne fonctionnelle continue, en prenant soin de limiter les temps morts entre chacun pour réduire le temps de traitement. Corrélativement, si certains opérateurs sont susceptibles d'introduire un ralentissement du débit, on crée avantageusement des chaînes parallèles à ce niveau pour maintenir un débit de traitement constant.

L'utilisation optimale des organes matériels devant être assurée, on recherchera un fonctionnement permanent de tous les opérateurs sans phase inactive. Cela est possible à condition d'effectuer un brassage du flux de données relatives à une fenêtre entre des opérateurs du type A et des opérateurs du type B en nombres convenables pour tenir compte de leur vitesse de traitement relative. Cette organisation conduit à une gestion des moyens telle que la chaîne fonctionnelle ne coïncide plus nécessairement avec une chaîne matérielle déterminée. En particulier, une itération pourra utiliser des opérateurs différents de ceux du premier passage dans la mesure où ceux-ci ont pu être affectés au traitement d'une nouvelle fenêtre.

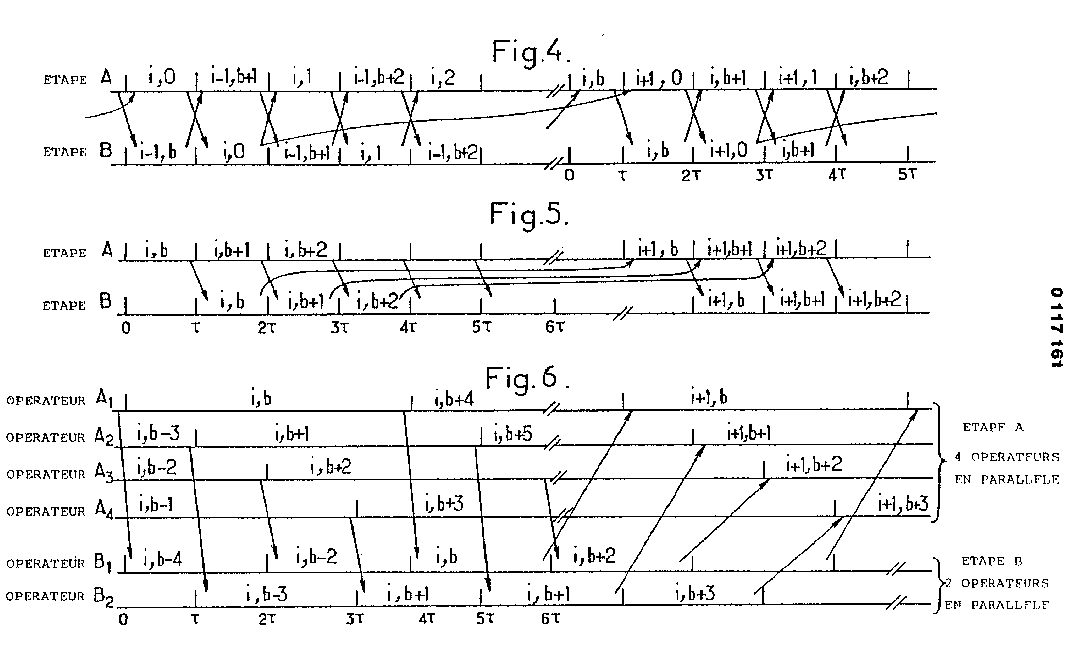

Les figures 4 et 5 donnent deux exemples d'utilisation optimale des opérateurs de type A et de type B.

Dans les deux cas, ces opérateurs ont été prévus de manière à ce que chacun soit capable de traiter une fenêtre en un temps $\tau$ correspondant à la cadence vidéo.

Dans la figure 4, les coefficients servant à initialiser la fenêtre b de l'image i sont les résultats obtenus à l'issue du traitement de la fenêtre précédente (b — 1) de la même image i. Les opérateurs A fonctionnent donc pour (i, b) pendant un premier intervalle de temps 0, $\tau$ puis les opérateurs B pendant $[\tau, 2\tau]$ puis les opérateurs A sur (i, b + 1) pendant $[2\tau, 3\tau]$, et ainsi de suite. Chacun des opérateurs est donc occupé a 50 % du temps, pour l'image i, et le traitement complet de l'image se fait à moitié de la cadence temps réel. Les 50 % de temps restant peuvent être utilisés pour traiter une autre image, i + 1 par exemple. La seule précaution consiste à décaler les traitements de i et de i + 1 de manière à ce que l'initialisation des coefficients pour la première fenêtre de chaque image puisse utiliser les résultats de la première fenêtre de l'image précédente. On traite donc deux images simultanément à demi-cadence temps réel ce qui équivaut au traitement d'une image en temps réel. Une mémoire tampon est nécessaire dans ce mode.

Dans la figure 5, les coefficients servant à initialiser la fenêtre b de l'image i + 1 sont les résultats obtenus à l'issue du traitement de la même fenêtre b sur l'image i.

La fenêtre (i, b) est traitée successivement par A puis par B et les résultats sont mémorisés jusqu'à l'arrivée de la fenêtre (i + 1, b).

Il convient de noter que ce deuxième mode se prête à un traitement parallèle, bien adapté à l'emploi de processeurs microprogrammables. En effet, la seule contrainte de temps tient au fait que le résultat des étapes A et B sur (i, b) doit être disponible avant l'arrivée de (i + 1, b). A la limite, il peut donc y avoir autant de chaînes de traitement A + B indépendantes qu'il y a de fenêtres dans une image, chacune traitant une fenêtre pendant le temps d'une image. Plus généralement, s'il y a q fenêtres dans une image, on peut concevoir q/k chaînes indépendantes de type A, q/k, chaînes indépendantes de type B, sans que k et k' soient nécessairement identiques (voir Fig. 6).

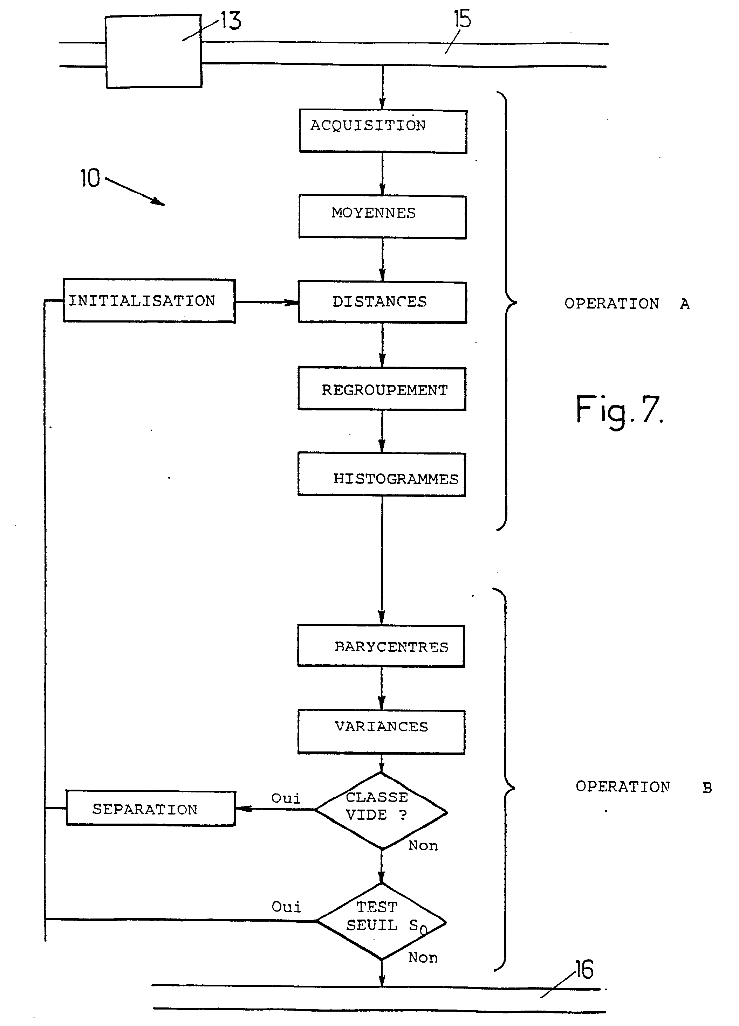

En se reportant à la figure 7, on peut voir le schéma synoptique de fonctionnement du sous-ensemble de classification désigné par 10 sur la figure 2. La progression s'effectue du haut en bas de la figure 7, entre un bus d'entrée 15 et un bus de sortie 16. Après acquisition des données relatives à une réunion de pixels (selon la Fig. 3 par exemple), les moyennes des luminances et chrominances sont calculées. Il y a ensuite calcul des distances de l'extrémité du vecteur, ayant pour composantes ces valeurs moyennes, aux extrémités des vecteurs identifiant les classes qui ont été initialisées. Chaque point est rangé dans la classe correspondant à la plus faible distance (regroupement). Les points de chaque classe sont comptés (histogrammes). On passe ensuite à l'opération B concernant toute la fenêtre.

Les barycentres de chaque classe sont calculés (barycentres) puis les variances de chaque classe (variances).

Il y a ensuite un test de classe vide. On procède à la détection de la ou des classes dans lesquelles aucun point n'a été rangé.

Si au moins une telle classe existe, on effectue une « séparation », consistant en une création de nouvelles classes par dédoublement de la classe ayant la plus grande variance.

Ceci est obtenu automatiquement en définissant, à partir du barycentre de cette classe ayant la plus grande variance, deux valeurs d'initialisation différentes symétriques et distantes d'au moins un pas de quantification en plus ou en moins dans toutes les directions. On a ainsi deux valeurs nouvelles qui définissent nécessairement deux classes indépendantes au cours de l'itération postérieure.

L'opération est renouvelée s'il existe encore une classe vide après le premier dédoublement.

On est ainsi assuré d'utiliser, pour chaque fenêtre, la totalité des classes disponibles et cette précaution est une source d'amélioration sensible des performances du système.

Les nouvelles composantes des vecteurs identifiant les classes sont utilisées pour une nouvelle initialisation en vue d'une itération.

Si aucune classe n'est vide, on procède à un test de seuil $S_0$ pour décider s'il y aura, ou non, une itération. Par exemple, ce test de seuil peut consister à effectuer la somme des variances de chaque classe et à comparer cette somme à une valeur prédéterminée $S_0$.

Si la somme des variances est supérieure à $S_0$, une opération d'itération est commandée.

Si la somme des variances est inférieure ou égale à $S_0$, la classification est considérée comme satisfaisante et il y a transfert des codes, dans l'ordre des pixels, et transfert du dictionnaire des classes, par le bus de sortie 16 vers un système d'utilisation par exemple un système de transmission ou un système de stockage.

On a étudié, sur divers matériaux la convergence de la classification en fonction des divers paramètres qui interviennent dans les performances du servo-mécanisme que constitue l'algorithme décrit (gain de boucle, constante d'intégration, erreur résiduelle). Il apparaît qu'à partir d'une initialisation uniforme arbitraire, et sans aucune itération sur chaque fenêtre, il faut traiter une dizaine de fenêtres successives, chaque fenêtre fournissant le sous-ensemble d'initialisation de la suivante, pour obtenir un « régime permanent » caractérisé par une erreur quadratique moyenne de reconstruction relativement stable.

Si cette manière de procéder peut être envisagée lorsqu'on traite un message continu d'un grand nombre de fenêtres successives dont les premières peuvent supporter des erreurs importantes, elle semble exclue dans le cas d'images répétitives du genre télévision où l'on recherche une qualité identique sur la totalité de l'image.

On prévoit donc, comme déjà signalé, d'une part l'initialisation à partir de la ligne ou de l'image précédente mais aussi, pour chaque fenêtre, une phase d'adaptivité consistant à calculer, après le premier passage, les barycentres des points de chaque classe de la fenêtre pour itérer le processus et affiner encore la classification. On a constaté que l'erreur quadratique de reconstruction diminue après la première itération et se stabilise après 2 ou 3 itérations, selon la variabilité de l'image.

La contrepartie de ces opérations d'itération est l'augmentation par un facteur 2, 3 ou 4 du temps de traitement puisqu'il faut traiter chaque fois la fenêtre complète avant de pouvoir entamer une nouvelle itération. On recherchera un compromis acceptable entre la précision et le temps nécessaire pour l'obtenir.

Les systèmes de transmission utilisés, à partir du bus 16, doivent respecter un format permettant de retrouver, dans le flux de données, les codes de chaque réunion particulière de pixels d'une fenêtre et le dictionnaire correspondant. La solution la plus simple consiste à fournir, d'une part, la suite des codes dans l'ordre de succession des pixels dans la fenêtre, c'est-à-dire le long de la ligne d'analyse TV et, d'autre part, les valeurs des composantes de chaque classe par exemple dans l'ordre des codes croissants.

On obtient ainsi des paquets de longueur fixe qui pourront être facilement reconnus et traités dans l'opérateur du décodage.

Un autre avantage de cette organisation du message réside dans l'indépendance totale des fenêtres entre elles, en particulier au niveau des codes et du dictionnaire. Toute erreur n'affecte donc qu'un seul pixel si elle porte sur les codes et n'affecte qu'une seule fenêtre si elle porte sur le dictionnaire. On peut donc présager une bonne protection contre la propagation des erreurs. En outre, une procédure de protection simple du dictionnaire, sans correction des erreurs, est suffisante si l'on accepte, en cas de détection d'erreur, d'utiliser le dictionnaire de la fenêtre précédente qui présente de grandes analogies du fait de la méthode d'initialisation et de la corrélation spatiale entre fenêtre.

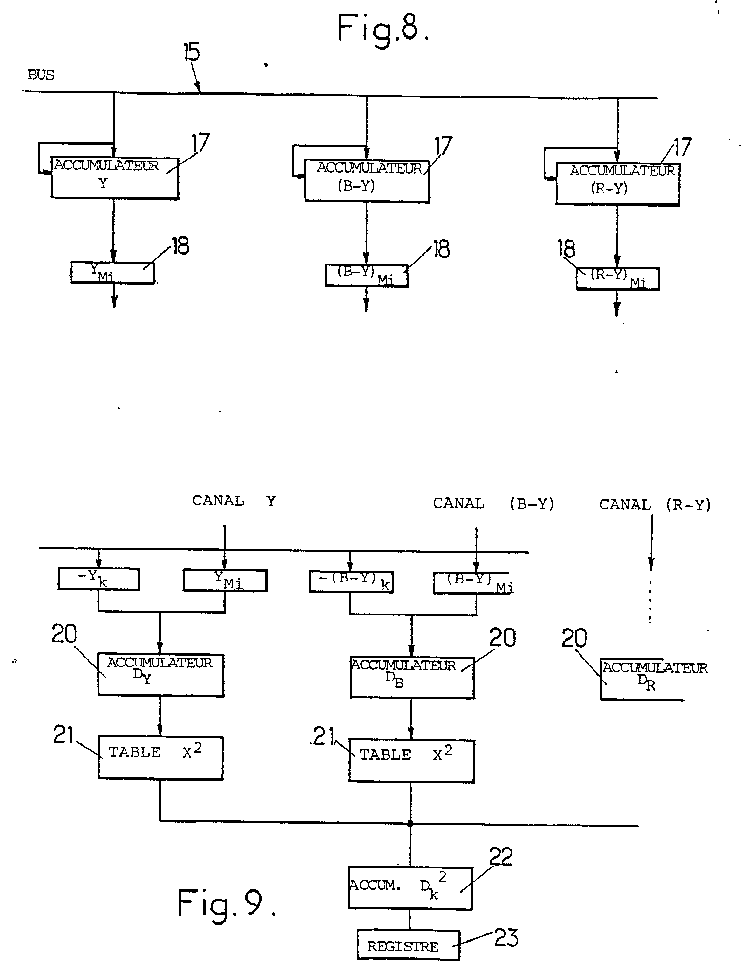

En se reportant aux figures 8 à 12, on peut voir des exemples de circuits pouvant constituer les opérateurs élémentaires désignés sur la figure 7.

La figure 8 montre un opérateur pour effectuer l'acquisition des données et le calcul des moyennes. Les données d'entrée étant supposées fournies avec un échantillonnage de 8 bits, le bus d'entrée 15 ou bus de données comporte 9 fils (8 fils pour les bits de données et 1 fil pour 1 bit de validation) par canal. Dans le cas de trois canaux, le bus 15 comporte donc 27 fils.

Les fils du bus alimentent un accumulateur 17 que l'on charge à la demande lorsqu'apparaissent les valeurs relatives au pixel courant, ces valeurs venant d'un convertisseur analogique digital ou d'une mémoire de trame précédemment chargée. Il y a autant d'accumulateurs 17 que de canaux ; dans l'exemple considéré, de la télévision en couleurs à trois canaux, il y a donc 3 accumulateurs 17 correspondant aux composantes Y, B — Y et R — Y. Chaque accumulateur 17 fait la sommation des radiométries qui le concernent, pour 4 pixels de types 0, 1, 2 et 3 tels que représentés sur la figure 3.

Dans le cas représenté sur la figure 8, l'accumulateur 17, situé le plus à gauche, destiné à la composante Y est à 10 bits en sortie, tandis que les deux autres accumulateurs affectés aux deux autres composantes B — Y et R — Y sont à 9 bits en sortie.

Un décalage (shift) de bits permet de délivrer les valeurs moyennes du pixel courant i dans des registres 18 où s'inscrivent donc les valeurs $Y_{Mi}$, $(B - Y)_{Mi}$, $(R - Y)_{Mi}$.

La figure 9 montre un opérateur « distances », destiné à calculer, pour chaque pixel i les valeurs :

$$D_Y^2 = (Y_i - Y_k)^2$$
$$D_R^2 = [(R - Y)_i - (R - Y)_k]^2$$
$$D_B^2 = [(B - Y)_i - (B - Y)_k]$$

et à faire leur somme qui est égale au carré de la distance de l'extrémité du vecteur représentant le pixel i au barycentre de la classe k.

Les valeurs des quantités $Y_k$, $(R - Y)_k$, $(B - Y)_k$ sont fournies à partir de la mémoire d'initialisation 19 (Fig. 7) sous forme complémentée à 3 accumulateurs distincts 20, affectés à chacun des 3 canaux, accumulateurs qui reçoivent également les valeurs $Y_{Mi}$, $(R - Y)_{Mi}$ et $(B - Y)_{Mi}$. Une table de conversion « carré », notamment formée par une mémoire PROM, est alors lue à l'adresse fournie par la différence donnée à la sortie de chaque accumulateur 20 ; la table de conversion 21 fournit sur sa sortie la valeur du carré correspondant, c'est-à-dire les valeurs respectives $D_Y^2$, $D_R^2$, $D_B^2$. On effectue alors dans un dernier accumulateur 22, la somme des carrés relatif aux 3 canaux ; cette somme est chargée dans un registre 23.

Selon la cadence de fourniture des données et la rapidité des circuits utilisés on pourra effectuer ces calculs pour chacune des 32 classes en série ou en parallèle ou toute combinaison série-parallèle envisageable, l'objectif étant de disposer pour l'opérateur suivant de 32 registres tels que le registre 23, chargés par les distances relatives aux 32 classes initialisées.

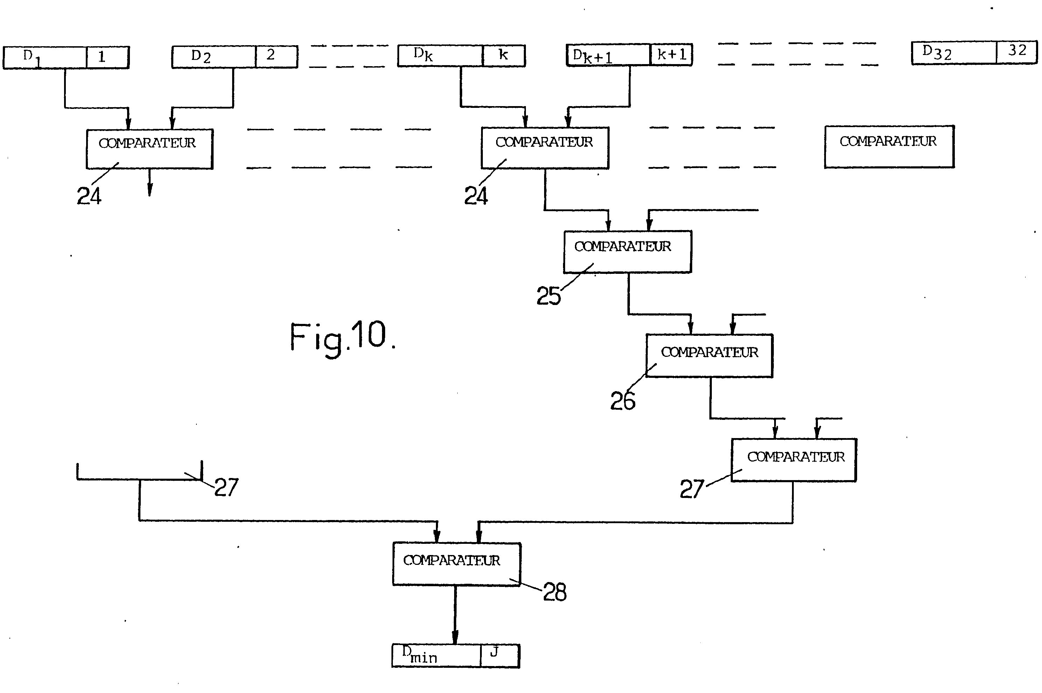

La figure 10 donne un schéma d'un opérateur pour effectuer le regroupement des points. Cet opérateur est destiné à déterminer, à partir des 32 distances calculées par l'opérateur de la figure 9, laquelle est la plus faible ; cet opérateur doit également désigner cette distance par le code de la classe correspondante.

Avantageusement, on associe à la valeur de chaque registre distance (tel que le registre 23 de la Fig. 9), 5 bits supplémentaires de poids faible, caractéristiques de la classe concernée par la distance ; sur la figure 10 on a représenté, schématiquement, par un grand rectangle les valeurs des distances D1, D2... et par un petit rectangle contigu le code de la classe numéroté 1, 2... et situé immédiatement à droite des grands rectangles. Un premier étage de comparateurs 24 est prévu pour effectuer la comparaison 2 à 2 de toutes les distances, ce qui donne 16 résultats sur les sorties des comparateurs 24, correspondant aux plus faibles valeurs des deux termes comparés. Un deuxième étage de comparateurs 25 permettra de réduire à 8 distances le résultat de la comparaison et de proche en proche, avec le troisième étage de comparateur 26 et le quatrième étage de comparateur 27, on aboutit à un cinquième étage formé par le seul comparateur 28 qui délivre, sur sa sortie, la plus courte des 32 distances, et le code J de la classe correspondante.

D'autres montages permettant de réduire soit le temps de traitement, soit le volume de matériel nécessaire, seraient également possibles pour aboutir au même résultat.

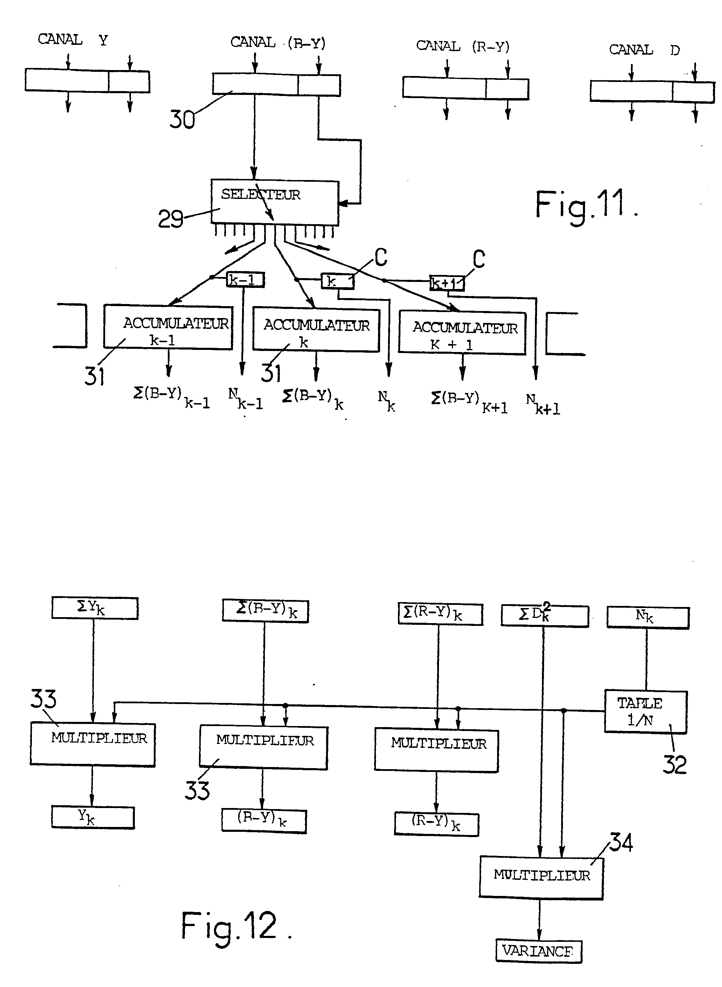

La figure 11 est un schéma d'un circuit pour réaliser les histogrammes. Cette étape qui fait encore partie des opérations de type A, parce qu'actionnée à chaque nouveau pixel, est la préparation des opérations de type B. Elle permet d'effectuer, pour chaque canal (pratiquement dans 3 opérateurs parallèles) la sommation des radiométries des pixels de chaque classe, et dans un quatrième opérateur parallèle, la sommation des carrés des distances minimum correspondantes ; il y a en outre incrémentation d'un compteur de pixels par classe.

Chaque opérateur comporte un sélecteur 29 à une entrée et 32 sorties qui aiguille le contenu d'un registre 30 chargé par la donnée radiométrie ou distance du pixel courant vers l'un des accumulateurs 31 d'un banc de trente-deux accumulateurs, ledit accumulateur étant sélectionné par le mot de code affecté aux pixels. Simultanément l'un des trente-deux compteurs C de pixels est incrémenté d'une unité. En fin de fenêtre, chacun des 4 accumulateurs de classe (3 accumulateurs pour les caractéristiques Y, R — Y et B — Y, et un accumulateur pour la distance), et chaque compteur correspondant, est interrogé pour charger 5 registres « somme » effectivement affectés aux radiométries Y, R — Y, B — Y, aux distances et au nombre de pixels de la classe.

La figure 12 montre le schéma d'un opérateur pour le calcul des barycentres et des variances. Il s'agit d'effectuer un calcul systématique, en fin de fenêtre, des coordonnées du nouveau barycentre de chaque classe à partir des radiométries des pixels qui la composent. Suivant le temps dont on dispose, on pourra envisager diverses solutions allant de l'opérateur unique traitant successivement toutes les classes, à n opérateurs travaillant en parallèles pour 32/n classes avec n = 2, 4, 8, 16 ou 32.

Le calcul des coordonnées du barycentre consiste à diviser les sommations des radiométries par le nombre des pixels de la classe.

Pour cela, on prévoit une table 32 de conversion des inverses, cette table 32 est adressée à l'aide du nombre de pixels de la classe, et la table 32 fournit sur sa sortie l'inverse du nombre qui est appliqué à un multiplieur 33 recevant sur son autre entrée le contenu de l'un des registres de radiométrie. Le résultat fourni à la sortie du multiplieur 33 est la coordonnée du barycentre correspondant.

Le calcul de la variance de chaque classe est effectué similairement par un opérateur de structure identique à celui qu'on vient de décrire, à partir du registre « somme des carrés des distances » dont on divise le contenu par le nombre de pixels de la classe. Ce résultat est obtenu à l'aide d'un multiplieur 34 dont l'une des entrées reçoit la somme des carrés des distances et l'autre entrée l'inverse du nombre de pixels.

Si l'on détecte une classe vide, par exemple par l'identité des bits du nombre à zéro, on effectuera, en outre, une comparaison des variantes de toutes les classes pour rechercher celle de variance maximale qui sera dédoublée. Cette recherche est effectuée de la même façon que l'on a, au regroupement, trouvé la plus courte distance. L'opérateur aura une structure semblable à celle représentée de la figure 10, de comparateurs étagés ; toutefois, dans le cas de la recherche de la variance maximale, on sélectionnera le résultat le plus grand au lieu de sélectionner le résultat le plus faible dans le cas du regroupement décrit avec référence à la figure 10. Le code de la classe correspondant à la plus forte variance est utilisé pour sélectionner les valeurs des coordonnées du barycentre que l'on modifie par addition et soustraction d'un pas ou plus pour générer deux nouveaux barycentres séparés.

L'opération d'initialisation consiste à transférer les valeurs des radiométries de barycentre $Y_k$, $(R — Y)_k$ $(B — Y)_k$ dans une mémoire d'initialisation 19 (Fig. 7) constituée de trois bancs de 32 cellules à 8 bits qui serviront à l'opérateur « calcul de distances » aussitôt qu'une nouvelle classification (ou itération) sera nécessaire.

Il est à noter, toutefois, que l'initialisation de la première fenêtre d'une nouvelle image (partie haute) proviendra d'une autre mémoire d'initialisation identique à la précédente. Il suffit qu'elle ait été chargée lors de la classification de l'image précédente par les résultats de la première fenêtre de cette image ; la corrélation temporelle entre images permettra généralement d'obtenir un bon résultat.

Naturellement, cette procédure peut aussi être appliquée à tous les blocs de l'image si l'on dispose d'une mémoire d'initialisation de capacité suffisante pour stocker l'ensemble des dictionnaires obtenus lors de la classification de l'image précédente.

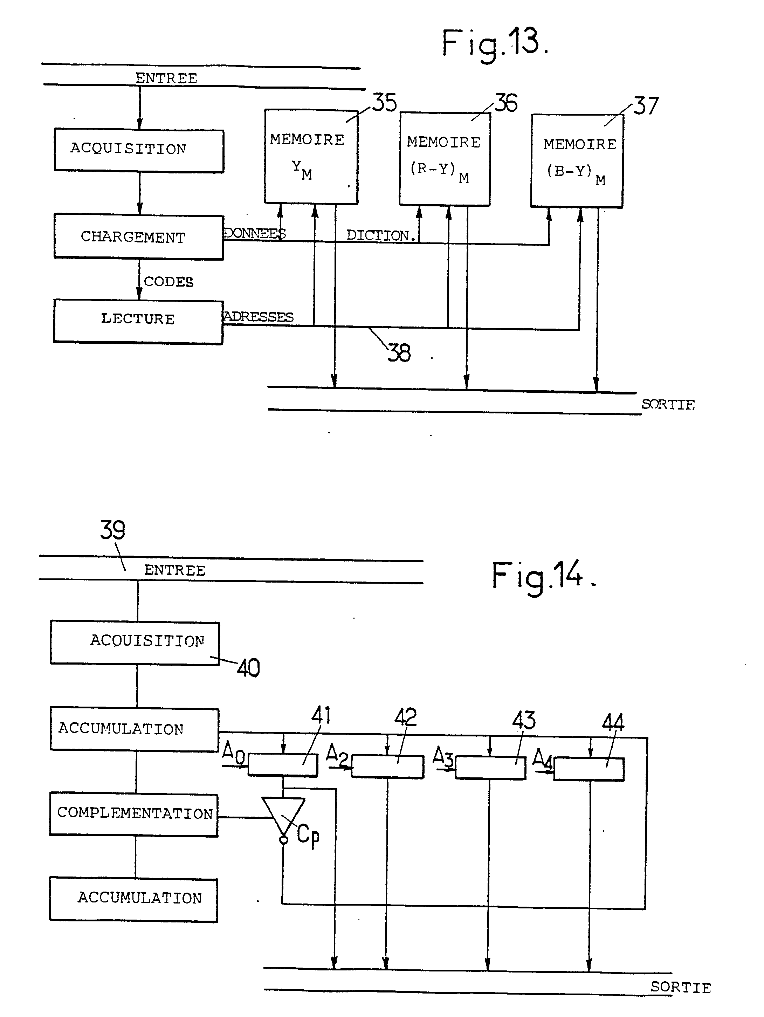

En se reportant à la figure 13, on peut voir une représentation schématique des moyens qui assurent, à la réception, le décodage des informations issues des opérations A et B de classification. Ces moyens de décodage peuvent être réalisés très simplement à partir de trois mémoires 35, 36, 37, respectivement chargées, à des adresses progressivement croissantes, par les composantes $Y_M$, $(R — Y)_M$ et $(B — Y)_M$ de chaque classe fournie par le dictionnaire supposé transmis suivant l'ordre croissant des classes. Chaque code de pixel reçu est appliqué au bus d'adresse 38 et provoque la lecture des valeurs des composantes correspondantes de chacune des mémoires 35, 36, 37. On obtient ainsi, les radiométries de chaque groupe de pixels qui seront utilisées pour constituer chaque pixel du groupe après combinaison avec le résultat du décodage des composantes hautes fréquences de Y.

Le codage de 4 échantillons de luminance par transformation de Walsh-Hadamard peut être effectué par un opérateur simple représenté sur la figure 14 et constitué d'accumulateurs et d'un complémenteur.

Il convient de calculer les quantités $WH_1$, $WH_2$ et $WH_3$ déjà indiquées :

$$WH_1 = 1/2 \ (Y_2 + Y_3 - Y_0 - Y_1)$$
$$WH_2 = 1/2 \ (Y_2 - Y_3 - Y_0 + Y_1)$$
$$WH_3 = 1/2 \ (Y_2 - Y_3 + Y_0 - Y_1).$$

Ces quantités peuvent s'exprimer à partir de la quantité $Y_M = WH_0 = 1/2 \ (Y_0 + Y1 + Y_2 + Y_3)$ par

$$WH_1 = Y_2 + Y_3 - WH_0$$
$$WH_2 = Y_2 + Y_1 - WH_0$$
$$WH_3 = Y_2 + Y_0 - WH_0$$

Le bus d'entrée 39 délivrant successivement les valeurs de radiométrie Y à cadence régulière, les calculs peuvent être effectués à l'aide de l'opérateur dont le schéma est donné sur la figure 14.

A partir du bus de donnée 39, un registre à verrouillage 40 est chargé successivement par les valeurs à 8 bits de luminance $Y_0$, $Y_1$, $Y_2$, $Y_3$ des 4 pixels du groupe.

Ces valeurs sont transférées à des accumulateurs 41, 42, 43, 44, en parallèle mais sélectivement sous l'effet des commandes d'activation A1, A2, A3, A4. La commande A1 permet l'accumulation des 4 radiométries dans l'accumulateur 41 alors que les accumulateurs 42, 43 et 44 ne sont activés que pour $Y_2$ et $Y_3$, $Y_2$ et $Y_1$ et $Y_2$ et $Y_0$ respectivement. Dans une dernière phase, le résultat de l'accumulateur 41 est transféré, à travers le complémenteur $C_p$, vers les entrées des 3 autres accumulateurs pour effectuer les soustractions de $WH_0$. On dispose alors sur les sorties des accumulateurs des coefficients recherchés qui sont alors appliqués à un dispositif de classification analogue à celui déjà décrit pour les composantes trichromes basse fréquence. On obtient, en définitive, 3 codes de classes $WH_1$, $WH_2$ et $WH_3$ et un dictionnaire relatif aux valeurs moyennes de chaque code d'une fenêtre de traitement.

A la réception, deux opérations sont nécessaires pour retrouver les valeurs des radiométries. En premier lieu, on doit effectuer l'opération de déclassification c'est-à-dire retrouver pour chaque groupe de pixels la valeur des coefficients de WH qui lui sont affectés par les trois codes reçus. Ceci est effectué par un opérateur identique à celui de la figure 13, les trois mémoires étant ici affectées à $WH_1$, $WH_2$ et $WH_3$ chargées à partir du dictionnaire, mais avec la différence que chaque code étant spécifique n'adresse plus qu'une seule mémoire parmi les trois pour effectuer la lecture des coefficients correspondants.

On doit ensuite combiner ces coefficients avec $Y_M$ obtenu lors du décodage de l'espace trichrome qui joue le rôle de $WH_0$ selon les combinaisons bien connues de la transformation de Walsh-Hadamard :

$$Y_0 = 1/2 \ (WH_0 - WH_1 - WH_2 + WH_3)$$
$$Y_1 = 1/2 \ (WH_0 - WH_1 + WH_2 + WH_3)$$
$$Y_2 = 1/2 \ (WH_0 + WH_1 + WH_2 + WH_3)$$
$$Y_3 = 1/2 \ (WH_0 + WH_1 - WH_2 - WH_3)$$

Comme précédemment, on remarque que ces quantités s'obtiennent à partir de $Y_2$ par :

$$Y_0 = WH_0 + WH_3 - Y_2$$
$$Y_1 = WH_0 + WH_2 - Y_2$$
$$Y_3 = WH_0 + WH_1 - Y_2$$

Ceci permet d'utiliser pour ce calcul un opérateur identique à celui de la figure 14 et fonctionnant de la même manière à la différence près que $Y_2$ est aussi transféré sur le bus de sortie pour définir la radiométrie du 4e pixel.

On a ainsi reconstitué le message initial de chaque fenêtre par les composantes de la réunion de pixels $Y_0$, $Y_1$, $Y_2$, $Y_3$ $(R - Y)_M$ et $(B - Y)_M$.

L'exemple d'application décrit concernait la télévision en couleurs ; toutefois, l'invention s'applique également à la télévision noir et blanc en définissant comme on l'a indiqué précédemment des canaux indépendants à partir d'un arrangement spatial des pixels au lieu d'une sélection spectrale.

L'invention peut s'appliquer à de nombreux autres domaines par exemple pour le traitement d'images couleurs dans le domaine aérospatial (image multispectrale dont le nombre de canaux peut atteindre 11), en photographie, en imprimerie, en télécopie. L'invention ne concerne pas seulement la transmission des images mais également le stockage des images codées numériquement et notamment leur enregistrement sur vidéo disques, cassettes ou analogues.

La transformation unitaire utilisée pour coder les pixels d'une réunion, du type de celle de la figure 3, aura un ordre convenable au nombre de pixels de la réunion et pourra être choisie parmi toutes celles décrites dans la littérature (Walsh-Hadamard, Slant, cosinus, Fourier, Haar, Karhunen-Loeve...) selon les critères considérés comme les plus importants (facilité de calcul, rapidité, aptitude à la compression...).

La transformation de Walsh-Hadamard est généralement la plus intéressante, avec la transformation cosinus, qui a toutefois l'inconvénient d'être plus compliquée à mettre èn œuvre.

## Revendications

1. Procédé de codage numérique d'une image composée de pixels régulièrement répartis dans le plan de l'image, auxquels sont attribuées une ou plusieurs qualités radiométriques dénommées composantes $C_i$, ces composantes pouvant notament être formées par les mesures des radiométries de chaque pixel dans N canaux spectraux fournies par des capteurs appropriés, suivant lequel :
— on détermine, dans l'image, des fenêtres (f) ayant une forme géométrique prédéterminée et comprenant un certain nombre de pixels (p) ;
— on effectue, pour chaque fenêtre, des regroupements en classes (R1, R2, ...) de radiométries (spectrales ou spatiales) des extrémités des vecteurs représentatifs des pixels ou de combinaisons de pixels de l'image dans l'espace à N dimensions, selon un critère de proximité ;
— on définit, pour chaque classe (R1, R2, ...) à partir des valeurs individuelles des pixels qui la constituent, N radiométries typiques qui seront stockées ou transmises pour être utilisées à la reconstruction de l'image ; et
— on stocke ou transmet également, pour définir chaque pixel, un code caractéristique de la classe (R1, R2, ...) à laquelle il appartient, permettant de lui affecter les radiométries typiques correspondantes pour la reconstruction de l'image,
caractérisé par le fait que l'on effectue un traitement de hautes fréquences spatiales, par une transformation unitaire dont l'un des coefficients, celui de la valeur moyenne correspondant à des fréquences spatiales plus basses, est associé aux composantes de canaux spectraux différents pour traitement par une classification complémentaire.

2. Procédé suivant la revendication 1, caractérisé en ce que la transformation unitaire est une transformation de Walsh Hadamard ou une transformation en cosinus.

3. Procédé suivant la revendication 1, pour le codage numérique d'une image multispectrale, notamment une image de télévision en couleurs, caractérisé par le fait que :
— on réunit plusieurs pixels (par exemple quatre pixels 0, 1, 2, 3) et on détermine, pour chaque réunion, une valeur moyenne des composantes de luminance $(Y_M)$ et de chrominance $(R — Y)_M$ $(B — Y)_M$ à partir de chaque composante de chaque pixel de la réunion ;
— on effectue les opérations de classification sur ces valeurs moyennes qui sont stockées ou transmises ;
— et, pour une reconstruction de tous les pixels, on applique une transformation linéaire aux signaux de luminance (Y) de chaque pixel, cette transformation linéaire permettant de réduire le volume d'informations et, lors de la reconstitution de l'image, on effectue une expansion d'information en déduisant, à partir des valeurs moyennes et des valeurs transformées, des valeurs pour chaque pixel de la réunion.

4. Procédé selon l'une quelconque des revendications 1 à 3, caractérisé par le fait que la fenêtre (f) est constituée par au moins une ligne de pixels (p) de l'image.

5. Procédé selon l'une quelconque des revendications 1 à 3, caractérisé par le fait qu'il comporte une phase d'adaptativité par itération sur la fenêtre et selon laquelle, pour une fenêtre déterminée, après avoir effectué une première classification des pixels, dans des classes prédéterminées, et après avoir calculé, pour chaque classe, des radiométries typiques à partir des valeurs individuelles des pixels constituant cette classe, on effectue une nouvelle classification de chaque pixel dans les nouvelles classes, ainsi déterminées, cette opération d'itération étant répétée autant de fois que nécessaire pour obtenir une précision prédéterminée.

6. Procédé selon l'une quelconque des revendications 1 à 3, caractérisé par le fait qu'il comporte une phase d'initialisation des classes à partir des résultats des calculs effectués sur la fenêtre immédiatement précédente.

7. Procédé selon l'une quelconque des revendications 1 à 3, caractérisé par le fait qu'il comporte une phase d'initialisation des classes d'une fenêtre à partir des résultats des calculs antérieurs portant sur la même fenêtre de l'image précédente dans le temps.

8. Procédé selon l'une quelconque des revendications 1 à 3, caractérisé par le fait que le nombre de classes pour une fenêtre est fixe, notamment égal ou supérieur à trente-deux.

9. Procédé selon l'une quelconque des revendications 1 à 3, caractérisé par le fait que l'on détecte la présence éventuelle de classes vides, dans lesquelles aucun pixel n'a été rangé et que, si au moins une telle classe vide existe, on effectue une séparation consistant en une création de nouvelles classes par dédoublement d'une classe, notamment celle ayant la plus grande variance.

15

**0 117 161**

10. Procédé selon l'une quelconque des revendications 1 à 3, caractérisé par le fait que l'on utilise une métrique non linéaire dans l'espace de classification.

11. Procédé selon la revendication 1, 2 ou 3, caractérisé par le fait qu'on applique la transformation unitaire aux luminances d'une réunion de pixels.

12. Procédé selon la revendication 11, caractérisé par le fait que les coefficients de la transformation sont quantifiés selon une loi non linéaire adaptée à chaque fenêtre, l'adaptation étant obtenue par classification de chaque coefficient, sur une seule dimension.

13. Dispositif pour la mise en œuvre d'un procédé selon la revendication 1, caractérisé par le fait qu'il comprend :

— des moyens (13) pour déterminer une fenêtre dans l'image et pour balayer toute l'image par cette fenêtre,

— des moyens d'acquisition et d'aiguillage (12) des valeurs relatives à chaque point élémentaire d'une fenêtre ;

— un sous-ensemble électronique de classification (10) comprenant des moyens (20, 21, 22) de calcul des distances de l'extrémité du vecteur correspondant à un point élémentaire ou à un point moyen de la réunion de plusieurs points élémentaires, aux extrémités des vecteurs identifiant chaque classe ;

— des moyens comparateurs (24, ..., 28) permettant de ranger chaque point élémentaire ou chaque point moyen dans la classe correspondant à la plus faible distance calculée ;

— des moyens de calcul (29, 31, 32, 33) des composantes du vecteur identifiant une classe à partir des différents points lui appartenant, la sortie du dispositif étant reliée à des moyens de transmission ou de stockage des données de sortie ; et

— un second sous-ensemble électronique (11) affecté à la transformation, les deux sous-ensembles (10, 11) fonctionnant dans deux voies parallèles.

14. Dispositif selon la revendication 13, caractérisé par le fait que les moyens de calcul des distances de l'extrémité du vecteur aux extrémités des vecteurs identifiant chaque classe comprennent, pour chaque canal, un accumulateur (20) fournissant, sur sa sortie, la différence entre deux composantes ($Y_{Mi} — Y_a$ ; ...), une table de conversion « carré » (21) propre à fournir le carré de cette différence ; et un autre accumulateur (22) propre à effectuer la somme des carrés.

15. Dispositif selon la revendication 13 ou 14, caractérisé par le fait que les moyens de calcul des composantes du vecteur identifiant une classe, à partir de différents points lui appartenant, comprennent un sélecteur (29) qui aiguille le contenu d'un registre chargé par une donnée vers un des accumulateurs (31) d'un banc d'accumulateurs, et un compteur (C) du nombre de pixels par classe.

16. Dispositif selon la revendication 13 ou 14, caractérisé par le fait qu'il comporte un opérateur de décodage comportant des mémoires (35, 36, 37) respectivement chargées, à des adresses progressivement croissantes, par les valeurs $[Y_M, (R — Y)_M, (B — Y)_M]$ de chaque classe fournie par le dictionnaire, le bus d'adresses (38) de ces mémoires recevant le code de chaque classe et celui de chaque pixel à la lecture.

17. Dispositif selon la revendication 13 ou 14, caractérisé par le fait qu'il comprend, pour le codage d'une réunion d'échantillons de luminance par transformation unitaire, un opérateur constitué d'accumulateurs (41, 42, 43, 44) et d'un complémenteur ($C_p$).

**Claims**

1. A method for the digital coding of an image made up of pixels which are regularly distributed in the plane of the image and to which one or more radiometric qualities denoted as components $C_i$ are allotted, such components possibly being particularly formed by the measurements of the radiometries of each pixel in N spectral channels supplied by suitable sensors, wherein :

— windows (f) are determined in the image which have a predetermined geometrical shape and comprise a certain number of pixels (p) ;

— for each window, regroupings are performed into classes (R1, R2, ...) of radiometries (spectral or spatial) of the ends of the vectors which represent the pixels or combinations of pixels of the image in a space of N dimension in accordance with a criterion of proximity ;

— for each class (R1, R2, ...), from the individual values of the pixels forming the class, N typical radiometries are defined which will be stored or transmitted to be used in the reconstruction of the image ; and

— to define each pixel, a characteristic code of the class (R1, R2, ...) to which it belongs is also stored or transmitted, enabling it to be given the typical corresponding radiometries for the reconstruction of the image :

characterised in that a processing of high spatial frequencies is performed by a unit transformation one of whose coefficients, that of the main value corresponding to lower spatial frequencies, is associated with the components of different spectral channels for processing by a complementary classification.

2. A method according to claim 1, characterised in that the unit transformation is a Walsh Hadamard transformation or a cosine transformation.

3. A method according to claim 1, for the digital coding of a multispectral image, particularly a colour

16

television image, characterised in that :

— a plurality of pixels (for example four pixels 0, 1, 2, 3) are combined, and for each combination a mean value of the luminance $(Y_M)$ and chrominance $(R — Y)_M$ $(B — Y)_M$ components is determined from each component of each pixel of the combination ;

— the classification operations are performed on such mean values, which are stored or transmitted ;

— and, for a reconstruction of all the pixels, a linear transformation is applied to the luminance signals (Y) of each pixel, such linear transformation enabling the volume of information to be reduced and, when the image is reconstituted, an expansion of information is performed by deducting, from the mean values and the transformed values, values for each pixel of the combination.

4. A method according to any one of claims 1 to 3, characterised in that the window (f) is formed by at least one line of pixels (p) of the image.

5. A method according to any one of claims 1 to 3, characterised in that it comprises a phase of adaptation by iteration on the window and by which, for a particular window, after a first classification of the pixels into predetermined classes has been performed, and typical radiometries have been computed for each class from the individual values of the pixels forming such class, a fresh classification of each pixel is performed into the new classes thus determined, such iteration operation being repeated as many times as necessary to obtain a predetermined accuracy.

6. A method according to any one of claims 1 to 3, characterised in that it comprises an initialisation phase of the classes from the results of the calculation carried out on the immediately preceding window.

7. A method according to any one of claims 1 to 3, characterised in that it comprises an initialisation phase of the classes of a window from the results of the preceding calculations relating to the same window of the image preceding in time.

8. A method according to any one of claims 1 to 3, characterised in that the number of classes for a window is fixed, and may particularly be equal to or greater than thirty-two.

9. A method according to any one of claims 1 to 3, characterised in that the possible presence of empty classes is detected, in which no pixel has been included and, if at least one such empty class exists, a separation is performed consisting in a creation of fresh classes by splitting a class, particularly the class having the highest variance.

10. A method according to any one of claims 1 to 3, characterised in that non-linear metrics are used in the classification space.

11. A method according to claims 1, 2 or 3, characterised in that the unit transformation is applied to the luminances of a combination of pixels.

12. A method according to claim 11, characterised in that the coefficients of the transformation are subjected to quantization according to a non-linear law adapted to each window, such adaptation being obtained by the classification of each coefficient on one single dimension.

13. A device for carrying out a method according to claim 1, characterised in that it comprises :

— means (13) for producing a window within the image and for scanning the whole image by such window ;

— means (12) for acquiring and switching the values relating to each elementary point of a window ;

— an electronic classification subassembly (10) comprising means (20, 21, 22) for computing the distances between the end of the vector corresponding to an elementary point or to a mean point of the combination of a plurality of elementary points and the ends of the vectors identifying each class ;

— comparator means (24, ..., 28) for including each elementary point or each mean point in the class corresponding to the shortest distance calculated ;

— means (29, 31, 32, 33) for computing the components of the vector identifying a class from the different points belonging thereto, the output of the device being connected to means for transmitting or storing the output data ;

— a second electronic subassembly (11) associated with the transformation, the two subassemblies (10, 11) operating in two parallel paths.

14. A device according to claim 13, characterized in that the means for computing the distances between the end of the vector and the ends of the vectors identifying each class comprise, for each channel, an accumulator (20) supplying at its output the difference between two components $(Y_{Mi} — Y_a$ ; ...) ; a « square » conversion table (21) adapted to supply the square of such difference ; and another accumulator (22) to sum the squares.

15. A device according to claim 13 or 14, characterised in that the means for computing the components of the vector identifying a class from the different points belonging thereto, comprise a selector (29) which switches the contents of a register containing a data element to one of the accumulators (31) of a bank of accumulators, and a counter (C) for counting the number of pixels per class.

16. A device according to claim 13 or 14, characterised in that it comprises a decoding operator comprising stores (35, 36, 37) which are respectively loaded, at progressively increasing addresses, with the values $(Y_M, (R — Y)_M, (B — Y)_M)$ in each class supplied by the dictionary, the address bus (38) of such stores receiving the code of each class and that of each pixel on reading out.

17. A device according to claim 13 or 14, characterised in that it comprises, for the coding of a combination of luminance samples by unit transformation, an operator formed by accumulators (41, 42, 43, 44) and means delivering the complement ($C_p$).

**Patentansprüche**

1. Verfahren zur digitalen Codierung eines Bildes, das aus regelmässig über die Bildebene verteilten Bildpunkten gebildet wird, welchem eine oder mehrere radiometrische Eigenschaften, bezeichnet als Komponente $C_i$ zugeordnet sind, wobei diese Komponenten insbesondere durch Messungen der Radiometrie eines jeden Bildpunktes in N Spektralkanälen, die durch geeignete Sensoren bereitgestellt werden, gebildet sind, wobei dieses Verfahren folgende Schritte umfasst :
— man bestimmt in dem Bild Fenster (f) einer vorbestimmten geometrischen Form und umfassend eine bestimmte Anzahl an Bildpunkten (p) ;
— man führt für jedes Fenster Umgruppierungen in Klassen (R1, R2 ...) von Radiometrien (spektralen oder räumlichen) der für die Bildpunkte oder Kombinationen von Bildpunkten in einem N-dimensionalen Raum charakteristischen Extremvektoren durch, nach einem Nähekriterium ;
— man definiert für jede Klasse (R1, R2 ...), ausgehend von den individuellen Werten der Bildpunkte, die diese bilden, N typische Radiometrien, die gespeichert oder weitergeleitet werden, um bei der Rekonstruktion des Bildes verwendet zu werden ;
— man speichert oder überträgt ebenso, um jeden Bildpunkt zu definieren, einen charakteristischen Code der Klasse (R1, R2 ...) zu welcher er gehört, der es erlaubt, ihm die typischen, für die Rekonstruktion des Bildes passenden Radiometrien zuzuweisen,
dadurch gekennzeichnet, dass man eine Behandlung der hohen Raumfrequenzen durch eine Einheitstransformation, wovon jener Koeffizient, dessen Mittelwert mit den tiefsten Raumfrequenzen korrespondiert, mit Komponenten der verschiedenen Spektralkanäle für eine Behandlung durch eine komplimentäre Klassifikation verbunden ist, vollzieht.

2. Verfahren nach Anspruch 1, dadurch gekennzeichnet, dass die Einheitstransformation eine Walsh Hadamard-Transformation oder eine Kosinus-Transformation ist.

3. Verfahren nach Anspruch 1, für die numerische Codierung eines multispektralen Bildes, insbesondere eines Farbfernsehbildes, dadurch gekennzeichnet, dass
— man mehrere Bildpunkte (z. B. vier Bildpunkte 0, 1, 2, 3) vereinigt und man für jede Vereinigung einen Mittelwert der Komponenten der Helligkeit ($Y_M$) und der Farbe $(R — Y)_M$ $(B — Y)_M$ auf der Grundlage von jeder Komponente für jeden Bildpunkt der Vereinigung bestimmt ;
— man die Klassifikationsoperationen über diese Mittelwerte, die gespeichert oder übermittelt sind, durchführt ;
— und, für eine Rekonstruktion aller Bildpunkte, man eine lineare Transformation auf die Helligkeitssignale (Y) eines jeden Bildpunktes aufbringt, wobei diese lineare Transformation es erlaubt, das Volumen an Informationen zu reduzieren, und, während der Rekonstruktion des Bildes, man eine Expansion der Information durch Abzug, ausgehend von den Mittelwerten und den transformierten Werten, der Werte für jeden Bildpunkt der Vereinigung durchführt.

4. Verfahren nach einem der Ansprüche 1-3, dadurch gekennzeichnet, dass das Fenster (f) aus zumindest einer Linie von Bildpunkten (p) des Bildes besteht.

5. Verfahren nach einem der Ansprüche 1-3, dadurch gekennzeichnet, dass es eine Anpassungsphase durch Iteration auf das Fenster umfasst und gemäss welcher, für ein bestimmtes Fenster, nach Durchführung einer ersten Klassifikation der Bildpunkte in den vorbestimmten Klassen, und nach Berechnung für jede Klasse der typischen Radiometrien auf der Grundlage der individuellen Werte der diese Klasse bildenden Bildpunkte, man eine neue Klassifikation von jedem Bildpunkt in den neuen Klassen, wie festgelegt, durchführt, wobei diese Iteration so oft wiederholt wird, wie es nötig ist, um eine bestimmte Genauigkeit zu erhalten.

6. Verfahren nach einem der Ansprüche 1-3, dadurch gekennzeichnet, dass es eine Initialisierungsphase der Klassen auf der Grundlage der Resultate der an dem unmittelbar vorhergehenden Fenster durchgeführten Berechnung umfasst.

7. Verfahren nach einem der Ansprüche 1-3, dadurch gekennzeichnet, dass es eine Initialisierungsphase der Klassen eines Fensters auf der Grundlage der Resultate der früheren Berechnungen, die auf demselben Fenster des zeitlich vorhergehenden Bildes beruhen, umfasst.

8. Verfahren nach einem der Ansprüche 1-3, dadurch gekennzeichnet, dass die Anzahl der Klassen für ein Fenster unveränderlich, insbesondere gleich oder grösser als 32 ist.

9. Verfahren nach einem der Ansprüche 1-3, dadurch gekennzeichnet, dass man die evtl. Anwesenheit leerer Klassen, in welchen keine Bildpunkte angeordnet worden sind, detektiert und dass, wenn zumindest eine solche leere Klasse existiert, man eine Separation bestehend aus einer Bildung von neuen Klassen durch Halbierung einer Klasse, insbesondere der mit der grössten Varianz, durchführt.

10. Verfahren nach einem der Ansprüche 1-3, dadurch gekennzeichnet, dass man eine in dem Raum der Klassifikation nicht lineare Metrik benutzt.

11. Verfahren nach Anspruch 1, 2 oder 3, dadurch gekennzeichnet, dass man die Einheitstransformation für die Helligkeiten aus einer Vereinigung von Bildpunkten bildet.

12. Verfahren nach Anspruch 11, dadurch gekennzeichnet, dass die Transformationskoeffizienten gemäss einem nicht linearen, an jedes Fenster angepassten Gesetz auf eine einzige Dimension quantifiziert sind, wobei die Adaptation durch Klassifikation eines jeden Koeffizienten erhalten wird.

13. Vorrichtung zur Durchführung eines Verfahrens nach Anspruch 1, dadurch gekennzeichnet, dass sie umfasst :

— Mittel (13), um ein Fenster in dem Bild zu bestimmen und um das ganze Bild mit diesem Fenster abzutasten,

— Akquisitions- und Lenkungs (12)-Mittel der mit jedem Elementarpunkt eines Fensters verbundenen Werte ;

— eine elektronische Klassifikationsuntereinheit (10) bestehend aus Mitteln (20, 21, 22) zur Berechnung der Abstände des zu einem Elementarpunkt oder zu einem mittleren Punkt der Vereinigung von mehreren Elementarpunkten korrespondierenden Extremvektors zu dem jede Klasse identifizierenden Extremvektoren ;

— Komparatormittel (24, ..., 28), die es erlauben, jeden Elementarpunkt oder jeden mittleren Punkt in der Klasse entsprechend des schwächsten berechneten Abstandes anzuordnen ;

— Mittel zur Berechnung (29, 31, 32, 33) der Komponenten des eine Klasse auf der Grundlage der ihm zukommenden verschiedenen Punkten identifizierenden Vektors, wobei der Ausgang der Vorrichtung mit Mitteln zur Übertragung oder zur Speicherung der Ausgangsgrössen verbunden ist ; und

— eine zweite zur Transformation beaufschlagte elektronische Untereinheit (11), wobei die beiden Untereinheiten (10, 11) in zwei parallelen Wegen arbeiten.

14. Vorrichtung nach Anspruch 13, dadurch gekennzeichnet, dass die Mittel zur Berechnung der Abstände des Extremvektors zu den jede Klasse identifizierenden Extremvektoren für jeden Kanal einen Akkumulator (20), der über seinen Ausgang die Differenz zwischen zwei Komponenten ($Y_{Mi} - Y_a$ ; ...) liefert, eine Konversionstafel « quadratisch » (21), geeignet, das Quadrat dieser Differenz zu liefern und einen anderen Akkumulator (22), geeignet die Summe der Quadrate zu bilden, umfasst.

15. Vorrichtung nach Anspruch 13 oder 14, dadurch gekennzeichnet, dass die Mittel zur Berechnung der Komponenten des eine Klasse identifizierenden Vektors, auf der Grundlage ihm erscheinender, verschiedener Punkte einen Selektor (29), der den Inhalt eines durch eine Grösse besetzten Registers zu einem der Akkumulatoren (31) von einer Reihe von Akkumulatoren leitet, und ein Zählwerk (C) für die Anzahl der Bildpunkte pro Klasse umfassen.

16. Vorrichtung nach Anspruch 13 oder 14, dadurch gekennzeichnet, dass sie aus einem Decodieroperator besteht, der Speicher (35, 36, 37) umfasst, die jeweils, mit progressiv wachsenden Adressen, durch die Werte [$Y_M$, $(R - Y)_M$, $(B - Y)_M$] von jeder Klasse, die durch die Übersetzungseinheit den Adressenbus (38), der von seinen Speichern den Code von jeder Klasse und den von jedem Bildpunkt bei der Ablesung erhält, besetzt sind.

17. Vorrichtung nach Anspruch 13 oder 14, dadurch gekennzeichnet, dass sie für die Codierung einer Vereinigung von Helligkeitsmustern durch Einheitstransformation einen aus Akkumulatoren (41, 42, 43, 44) und einem Komplementor ($C_p$) gebildeten Operator umfasst.

Fig.1.

Fig.2.

Fig.3.

ligne n

ligne n+1

ligne n+2

Fig.4.

ETAPE A: | i,0 | i-1,b+1 | i,1 | i-1,b+2 | i,2 | | | i,b | i+1, 0 | i,b+1 | i+1,1 | i,b+2 | |

ETAPE B: | i-1,b | i,0 | i-1,b+1 | i,1 | i-1,b+2 | | | i,b | i+1,0 | i,b+1 | | |

0    τ    2τ    3τ    4τ    5τ

Fig.5.

ETAPE A: | i,b | i,b+1 | i,b+2 | | | | | i+1,b | i+1,b+1 | i+1,b+2 | |

ETAPE B: | | i,b | i,b+1 | i,b+2 | | | | | i+1,b | i+1,b+1 | i+1,b+2 |

0    τ    2τ    3τ    4τ    5τ    6τ

Fig.6.

OPERATEUR $A_1$: | i,b | i,b+4 | | i+1,b | |

OPERATEUR $A_2$: | i,b-3 | i,b+1 | i,b+5 | | i+1,b+1 | |

OPERATEUR $A_3$: | i,b-2 | i,b+2 | | | i+1,b+2 | |

OPERATEUR $A_4$: | i,b-1 | i,b+3 | | | i+1,b+3 |

} ETAPE A — 4 OPERATEURS EN PARALLELE

OPERATEUR $B_1$: | i,b-4 | i,b-2 | i,b | i,b+2 | | |

OPERATEUR $B_2$: | i,b-3 | i,b+1 | i,b+1 | i,b+3 | | |

} ETAPE B — 2 OPERATEURS EN PARALLELE

0    τ    2τ    3τ    4τ    5τ    6τ

0 117 161

Fig. 7.

OPERATION   A

OPERATION   B

ACQUISITION

MOYENNES

INITIALISATION

DISTANCES

REGROUPEMENT

HISTOGRAMMES

BARYCENTRES

VARIANCES

SEPARATION

Oui

CLASSE VIDE ?

Non

Oui

TEST SEUIL $S_0$

Non

3

# Fig.8.

BUS 15

ACCUMULATEUR Y 17

ACCUMULATEUR (B-Y) 17

ACCUMULATEUR (R-Y) 17

$Y_{Mi}$ 18

$(B-Y)_{Mi}$ 18

18 $(R-Y)_{Mi}$

CANAL Y        CANAL (B-Y)        CANAL (R-Y)

$-Y_k$        $Y_{Mi}$        $-(R-Y)_k$        $(B-Y)_{Mi}$

20 ACCUMULATEUR $D_Y$

ACCUMULATEUR $D_B$ 20

20 ACCUMULATEUR $D_R$

21 TABLE $X^2$

21 TABLE $X^2$

ACCUM. $D_k^2$ 22

# Fig.9.

REGISTRE 23

4

Fig.10.

CANAL Y    CANAL (B-Y)    CANAL (R-Y)    CANAL D

30

29    SELECTEUR

Fig.11.

k-1    k    C    C    k+1

ACCUMULATEUR
k-1

ACCUMULATEUR
k

ACCUMULATEUR
K + 1

31    31

$\Sigma(B-Y)_{k-1}$    $N_{k-1}$    $\Sigma(B-Y)_k$    $N_k$    $\Sigma(B-Y)_{K+1}$    $N_{k+1}$

$\Sigma Y_k$    $\Sigma(B-Y)_k$    $\Sigma(R-Y)_k$    $\Sigma D_k^2$    $N_k$

33

TABLE
1/N

MULTIPLIEUR    MULTIPLIEUR    MULTIPLIEUR

32

33

$Y_k$    $(R-Y)_k$    $(R-Y)_k$

34

MULTIPLIEUR

Fig.12.

VARIANCE

# Fig.13.

ENTREE

ACQUISITION

MEMOIRE $Y_M$  ∕35

MEMOIRE $(R-Y)_M$  ∕36

MEMOIRE $(B-Y)_M$  ∕37

CHARGEMENT — DONNEES — DICTION.

CODES

LECTURE — ADRESSES

38

SORTIE

# Fig.14.

39

ENTREE

ACQUISITION

40

ACCUMULATION

$A_0$ ∕41  $A_2$ ∕42  $A_3$ ∕43  $A_4$ ∕44

COMPLEMENTATION

Cp

ACCUMULATION

SORTIE